# FASCICULE DE BREVET EUROPEEN

(11) **EP 4 311 779 B1**
(45) Date de publication et mention de la délivrance du brevet: **14.05.2025**
(21) Numéro de dépôt: 23186890.2
(22) Date de dépôt: 21.07.2023
(51) Int. Cl.: B64D 37/30, B64D 37/32, B64D 37/34, F02M 21/06, F17C 7/04

(54) **SYSTÈME D'ALIMENTATION EN DIHYDROGÈNE POUR UN MOTEUR D'AÉRONEF**
SYSTEM ZUR VERSORGUNG EINES FLUGZEUGMOTORS MIT DIWASSERSTOFF
DIHYDROGEN SUPPLY SYSTEM FOR AN AIRCRAFT ENGINE

(30) Priorité: 25.07.2022 FR 2207595
(43) Date de publication de la demande: 31.01.2024
(73) Titulaire: AIRBUS OPERATIONS, 31060 Toulouse Cedex 9 (FR)
(72) Inventeur: MARTIN, Pierre-Olivier, 31060 TOULOUSE (FR); CZAPLA, Lionel, 31060 TOULOUSE (FR); BELLEVILLE, Mathieu, 31060 TOULOUSE (FR)
(74) Mandataire: Cabinet Le Guen Maillet

(56) Documents cités:
- WO-A1-2020/188194
- WO-A1-2022/106053
- FR-A1- 3 114 355
- US-A1- 2014 174 083

## Description

### DOMAINE TECHNIQUE

La présente invention concerne un ensemble d'alimentation en dihydrogène pour un moteur d'aéronef, ainsi qu'un aéronef comportant un tel ensemble d'alimentation.

### ÉTAT DE LA TECHNIQUE ANTÉRIEURE

Afin de réduire les émissions de dioxyde de carbone (CO₂) des moteurs d'aéronef, il est connu d'utiliser le dihydrogène comme carburant. L'aéronef comporte alors un système principal d'alimentation qui comporte des réservoirs de dihydrogène liquide. Pour être utilisé par les moteurs, le dihydrogène doit être sous forme gazeuse et pour cela, le système principal d'alimentation comporte des réchauffeurs qui assurent le réchauffage du dihydrogène. Pour amener le dihydrogène du réservoir au moteur, le système principal d'alimentation comporte un réseau de canalisation, de pompes et de vannes qui va des réservoirs aux moteurs en passant par les réchauffeurs.

L'alimentation en dihydrogène doit être assurée même si un incident intervient sur l'un des éléments du système principal d'alimentation. Pour cela, il est connu de mettre en place un système redondant d'alimentation qui prend la main en cas de problème sur le système principal d'alimentation.

Bien qu'un tel arrangement soit performant du point de vue du fonctionnement, il génère du poids supplémentaire et de la complexité du fait de la duplication du système d'alimentation. Il est donc nécessaire de trouver un arrangement différent qui permet d'assurer l'alimentation en dihydrogène des moteurs même en cas d'incident tout en limitant le poids pour l'aéronef. Le document FR 3 114 355 A1 décrit un ensemble de stockage de carburant cryogénisé, comportant : un réservoir de carburant contenant du carburant liquide et un gaz pressurisant; un réservoir haute pression de gaz pressurisant relié au réservoir par une vanne pour pressuriser le carburant liquide; un conduit d'alimentation relié au réservoir et dans lequel circule du carburant liquide pour alimenter un ou des récepteurs; un premier échangeur de chaleur relié au carburant contenu dans le réservoir; un deuxième échangeur de chaleur traversé par le conduit d'alimentation de carburant et une pompe à chaleur reliée au premier et au deuxième échangeur de chaleur pour refroidir le carburant du réservoir en transférant sa chaleur vers le carburant circulant dans le conduit d'alimentation.

### EXPOSE DE L'INVENTION

Un objet de la présente invention est de proposer un système d'alimentation pour un moteur d'un aéronef où ledit système d'alimentation permet d'assurer l'alimentation en dihydrogène du moteur depuis un réservoir même en cas d'incident sur l'un des éléments dudit système d'alimentation.

À cet effet, est proposé un système d'alimentation pour un aéronef comportant un premier et un deuxième réservoirs de dihydrogène et un moteur, ledit système d'alimentation comportant
- un module d'alimentation comportant une première canalisation de sortie, une deuxième canalisation de sortie, une première canalisation d'apport équipée d'une première pompe principale et destinée à être fluidiquement connectée au premier réservoir, une deuxième canalisation d'apport équipée d'une deuxième pompe principale et destinée à être fluidiquement connectée au deuxième réservoir, et des moyens arrangés pour canaliser le dihydrogène des première et deuxième canalisations d'apport vers alternativement la première canalisation de sortie ou la deuxième canalisation de sortie ou les deux,
- un premier réchauffeur,
- un deuxième réchauffeur,
- un module de distribution comportant une première canalisation d'introduction fluidiquement connectée à la première canalisation de sortie à travers le premier réchauffeur, une deuxième canalisation d'introduction fluidiquement connectée à la deuxième canalisation de sortie à travers le deuxième réchauffeur, une première canalisation de distribution et une deuxième canalisation de distribution destinées à être fluidiquement connectées au moteur, et des moyens pour canaliser le dihydrogène des première et deuxième canalisations d'introduction vers alternativement la première canalisation de distribution ou la deuxième canalisation de distribution ou les deux,
- des moyens de détection prévus pour détecter un incident dans le module d'alimentation, et/ou le module de distribution, et/ou les premier et deuxième réchauffeurs, et pour délivrer des informations représentatives dudit incident détecté, et
- une unité de contrôle arrangée pour commander les moyens du module d'alimentation et/ou les moyens du module de distribution en fonction des informations délivrées par les moyens de détection.

Un tel système d'alimentation assure l'alimentation en dihydrogène du moteur depuis un réservoir même en cas d'incident sur l'un des éléments dudit système d'alimentation.

Selon un mode de réalisation particulier, le module d'alimentation comporte :
- une canalisation amont fluidiquement connectée entre les première et deuxième canalisations d'apport,
- une canalisation aval fluidiquement connectée entre la première canalisation de sortie et la deuxième canalisation de sortie,
- une première canalisation de liaison et une deuxième canalisation de liaison fluidiquement connectées en parallèle entre la canalisation amont et la canalisation aval,
- une première sous-canalisation et une deuxième sous-canalisation fluidiquement connectées en parallèle entre la première canalisation de liaison et la deuxième canalisation de liaison,
- une première électrovanne à deux voies montée sur la première canalisation de liaison entre la canalisation amont et la première sous-canalisation,
- une première pompe secondaire montée sur la première canalisation de liaison entre la première électrovanne et la première sous-canalisation,
- une deuxième électrovanne à deux voies montée sur la première canalisation de liaison entre la première sous-canalisation et la deuxième sous-canalisation,
- une troisième électrovanne de régulation à deux voies montée sur la première canalisation de liaison entre la deuxième sous-canalisation et la canalisation aval,
- une quatrième électrovanne à deux voies montée sur la première canalisation de liaison, entre la troisième électrovanne et la canalisation aval,
- une cinquième électrovanne à deux voies montée sur la deuxième canalisation de liaison entre la canalisation amont et la première sous-canalisation,
- une sixième électrovanne de régulation à deux voies montée sur la deuxième canalisation de liaison entre la cinquième électrovanne et la première sous-canalisation,
- une septième électrovanne à deux voies montée sur la deuxième canalisation de liaison entre la première sous-canalisation et la deuxième sous-canalisation,
- une deuxième pompe secondaire montée sur la deuxième canalisation de liaison entre la deuxième sous-canalisation et la canalisation aval,
- une huitième électrovanne à deux voies montée sur la deuxième canalisation de liaison entre la deuxième pompe secondaire et la canalisation aval,
- une neuvième électrovanne à deux voies montée sur la première sous-canalisation, et
- une dixième électrovanne à deux voies montée sur la deuxième sous-canalisation.

Selon un mode de réalisation particulier, le module d'alimentation comporte :
- une canalisation amont fluidiquement connectée entre les première et deuxième canalisations d'apport,
- une canalisation aval fluidiquement connectée entre la première canalisation de sortie et la deuxième canalisation de sortie,
- une première canalisation de liaison et une deuxième canalisation de liaison fluidiquement connectées en parallèle entre la canalisation amont et la canalisation aval,
- une première sous-canalisation et une deuxième sous-canalisation fluidiquement connectées en parallèle entre la première canalisation de liaison et la deuxième canalisation de liaison,
- une première électrovanne à deux voies montée sur la première canalisation de liaison entre la canalisation amont et la première sous-canalisation,
- une première pompe secondaire montée sur la première canalisation de liaison entre la première électrovanne et la première sous-canalisation,
- une deuxième électrovanne à deux voies montée sur la première canalisation de liaison entre la première sous-canalisation et la deuxième sous-canalisation,
- une deuxième pompe secondaire montée sur la première canalisation de liaison entre la deuxième sous-canalisation et la quatrième électrovanne,
- une quatrième électrovanne à deux voies montée sur la première canalisation de liaison, entre la troisième électrovanne et la canalisation aval,
- une cinquième électrovanne à deux voies montée sur la deuxième canalisation de liaison entre la canalisation amont et la première sous-canalisation,
- une sixième électrovanne de régulation à deux voies montée sur la deuxième canalisation de liaison entre la cinquième électrovanne et la première sous-canalisation,
- une septième électrovanne à deux voies montée sur la deuxième canalisation de liaison entre la première sous-canalisation et la deuxième sous-canalisation,
- une troisième électrovanne montée sur la deuxième canalisation de liaison entre la deuxième sous-canalisation et la canalisation aval,
- une huitième électrovanne à deux voies montée sur la deuxième canalisation de liaison entre la deuxième pompe secondaire et la canalisation aval,
- une neuvième électrovanne à deux voies montée sur la première sous-canalisation, et
- une dixième électrovanne à deux voies montée sur la deuxième sous-canalisation.

Selon un mode de réalisation particulier, le module d'alimentation comporte :
- une canalisation amont fluidiquement connectée entre les première et deuxième canalisations d'apport,
- une canalisation aval fluidiquement connectée entre la première canalisation de sortie et la deuxième canalisation de sortie,
- une première canalisation de liaison et une deuxième canalisation de liaison qui sont fluidiquement connectées en parallèle entre la canalisation amont et la canalisation aval,
- une première sous-canalisation et une deuxième sous-canalisation fluidiquement connectées en parallèle entre la première canalisation de liaison et la deuxième canalisation de liaison,
- à la connexion entre la canalisation amont et la première canalisation de liaison, une première électrovanne à trois voies,
- à la connexion entre la première canalisation de liaison et la première sous-canalisation, une deuxième électrovanne à trois voies,
- à la connexion entre la première canalisation de liaison et la deuxième sous-canalisation, une troisième électrovanne à trois voies,
- à la connexion entre la canalisation aval et la première canalisation de liaison, une quatrième électrovanne à trois voies,
- entre la première électrovanne et la deuxième électrovanne, une première pompe secondaire,
- entre la troisième électrovanne et la quatrième électrovanne, une cinquième électrovanne de régulation à deux voies,
- à la connexion entre la canalisation amont et la deuxième canalisation de liaison, une sixième électrovanne à trois voies,
- à la connexion entre la deuxième canalisation de liaison et la première sous-canalisation, une septième électrovanne à trois voies,
- à la connexion entre la deuxième canalisation de liaison et la deuxième sous-canalisation, une huitième électrovanne à trois voies,
- à la connexion entre la canalisation aval et la deuxième canalisation de liaison, une neuvième électrovanne à trois voies,
- entre la sixième électrovanne et la septième électrovanne, une dixième électrovanne de régulation à deux voies, et
- entre la huitième électrovanne et la neuvième électrovanne, une deuxième pompe secondaire.

Selon un mode de réalisation particulier, le module d'alimentation comporte :
- une canalisation amont fluidiquement connectée entre les première et deuxième canalisations d'apport,
- une canalisation aval fluidiquement connectée entre la première canalisation de sortie et la deuxième canalisation de sortie,
- une première canalisation de liaison et une deuxième canalisation de liaison qui sont fluidiquement connectées en parallèle entre la canalisation amont et la canalisation aval,
- une première sous-canalisation et une deuxième sous-canalisation fluidiquement connectées en parallèle entre la première canalisation de liaison et la deuxième canalisation de liaison,
- à la connexion entre la canalisation amont et la première canalisation de liaison, une première électrovanne à trois voies,
- à la connexion entre la première canalisation de liaison et la première sous-canalisation, une deuxième électrovanne à trois voies,
- à la connexion entre la première canalisation de liaison et la deuxième sous-canalisation, une troisième électrovanne à trois voies,
- à la connexion entre la canalisation aval et la première canalisation de liaison, une quatrième électrovanne à trois voies,
- entre la première électrovanne et la deuxième électrovanne, une première pompe secondaire,
- entre la troisième électrovanne et la quatrième électrovanne, une deuxième pompe secondaire,
- à la connexion entre la canalisation amont et la deuxième canalisation de liaison, une sixième électrovanne à trois voies,
- à la connexion entre la deuxième canalisation de liaison et la première sous-canalisation, une septième électrovanne à trois voies,
- à la connexion entre la deuxième canalisation de liaison et la deuxième sous-canalisation, une huitième électrovanne à trois voies,
- à la connexion entre la canalisation aval et la deuxième canalisation de liaison, une neuvième électrovanne à trois voies,
- entre la sixième électrovanne et la septième électrovanne, une dixième électrovanne de régulation à deux voies, et
- entre la huitième électrovanne et la neuvième électrovanne, une cinquième électrovanne de régulation à deux voies.

Selon une variante, la première canalisation d'introduction est fluidiquement connectée à la première canalisation de distribution, la deuxième canalisation d'introduction est fluidiquement connectée à la deuxième canalisation de distribution, et le module de distribution comporte :
- une canalisation de déviation fluidiquement connectée entre la première canalisation d'introduction et la deuxième canalisation d'introduction,
- une onzième électrovanne à deux voies montée sur la canalisation de déviation,
- entre le premier réchauffeur et la canalisation de déviation, une douzième électrovanne à deux voies montée sur la première canalisation d'introduction,
- entre la canalisation de déviation et le moteur, une treizième électrovanne montée sur la première canalisation de distribution,
- entre le deuxième réchauffeur et la canalisation de déviation, une quatorzième électrovanne à deux voies montée sur la deuxième canalisation d'introduction, et
- entre la canalisation de déviation et le moteur, une quinzième électrovanne montée sur la deuxième canalisation de distribution.

Selon une variante, la première canalisation d'introduction est fluidiquement connectée à la première canalisation de distribution, la deuxième canalisation d'introduction est fluidiquement connectée à la deuxième canalisation de distribution, et le module de distribution comporte :
- une canalisation de déviation fluidiquement connectée entre la première canalisation d'introduction et la deuxième canalisation d'introduction,
- à la connexion entre la première canalisation d'introduction et la canalisation de déviation, une onzième électrovanne à trois voies où une voie est fluidiquement connectée à la première canalisation d'introduction, une voie est fluidiquement connectée à la canalisation de déviation et une voie est fluidiquement connectée à la première canalisation de distribution,
- à la connexion entre la deuxième canalisation d'introduction et la canalisation de déviation, une douzième électrovanne à trois voies où une voie est fluidiquement connectée à la deuxième canalisation d'introduction, une voie est fluidiquement connectée à la canalisation de déviation et une voie est fluidiquement connectée à la deuxième canalisation de distribution.

L'invention propose également un aéronef comportant un premier et un deuxième réservoirs de dihydrogène, au moins un moteur et, pour chaque moteur, un système d'alimentation selon l'une des variantes précédentes, où chacune des première et deuxième canalisations d'apport est fluidiquement connectée à un des premier ou deuxième réservoirs, et où les première et deuxième canalisations de distribution sont fluidiquement connectées au moteur.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue de dessus d'un aéronef selon l'invention,
[Fig. 2] est une représentation schématique d'un système d'alimentation selon une première variante d'un premier mode de réalisation de l'invention,
[Fig. 3] est une représentation schématique d'un système d'alimentation selon une deuxième variante du premier mode de réalisation,
[Fig. 4] est une représentation schématique d'un système d'alimentation selon une première variante d'un deuxième mode de réalisation de l'invention, et
[Fig. 5] est une représentation schématique d'un système d'alimentation selon une deuxième variante du deuxième mode de réalisation de l'invention.

### EXPOSÉ DÉTAILLÉ DE MODES DE RÉALISATION

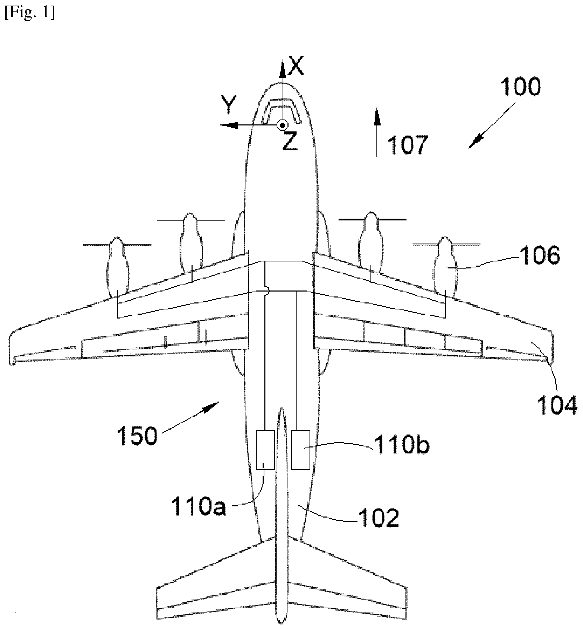

Dans la description qui suit, les termes relatifs à une position sont pris en référence à un aéronef en position normale de vol, c'est-à-dire comme il est représenté sur la Fig. 1.

Dans la description qui suit, et par convention, on appelle X la direction longitudinale de l'aéronef, on appelle Y la direction transversale qui est horizontale lorsque l'aéronef est au sol, et Z la direction verticale qui est verticale lorsque l'aéronef est au sol, ces trois directions X, Y et Z étant orthogonales entre elles.

La Fig. 1 montre un aéronef 100 qui comporte un fuselage 102 de chaque côté duquel est fixée une aile 104 qui porte au moins un moteur 106 fonctionnant avec du dihydrogène comme carburant. Dans le mode de réalisation de l'invention présenté à la Fig. 1, le moteur 106 est un moteur à hélice, mais tout autre type de moteur est envisageable.

La flèche 107 indique la direction en marche avant de l'aéronef 100.

L'aéronef 100 comporte un premier réservoir 110a et un deuxième réservoir 110b dans lesquels est stocké le dihydrogène sous forme liquide. Dans le mode de réalisation de l'invention, les deux réservoirs 110a-b sont disposés à l'arrière du fuselage 102, mais un positionnement différent est possible.

L'aéronef 100 comporte également un système d'alimentation 150 qui assure la connexion fluidique entre les réservoirs 110a-b et chaque moteur 106.

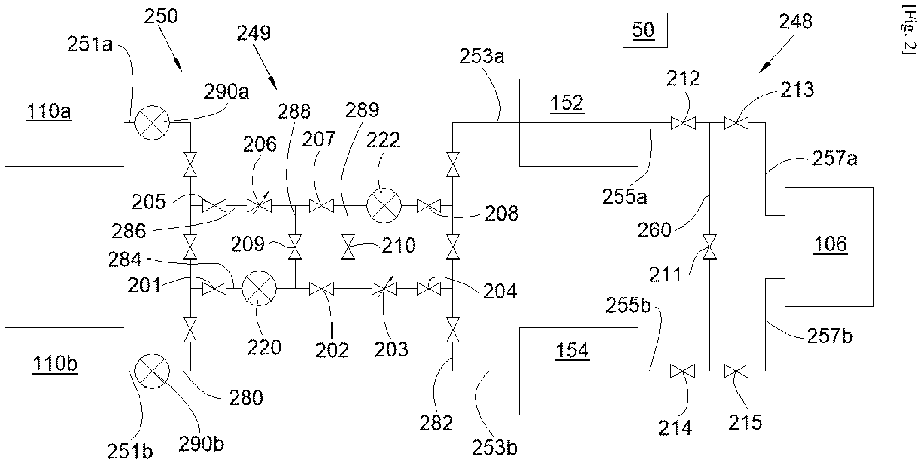

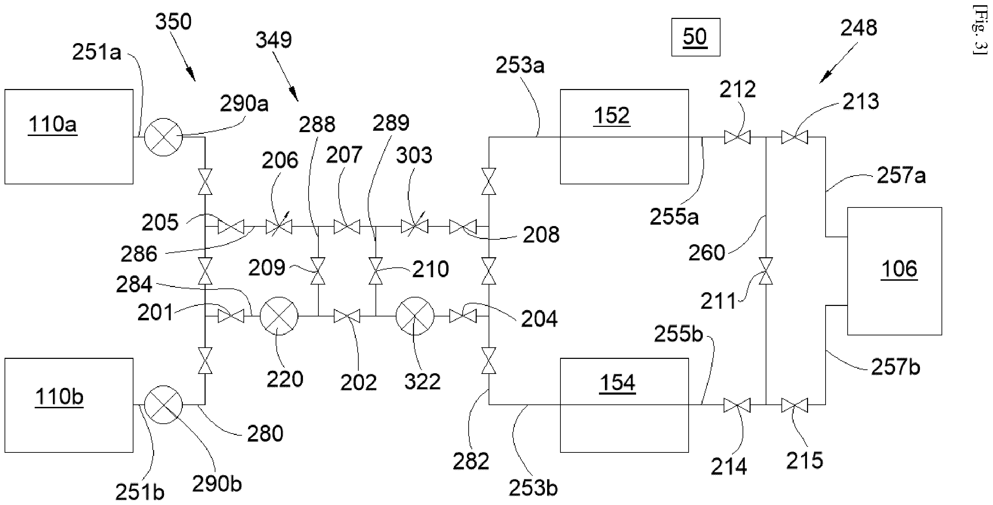

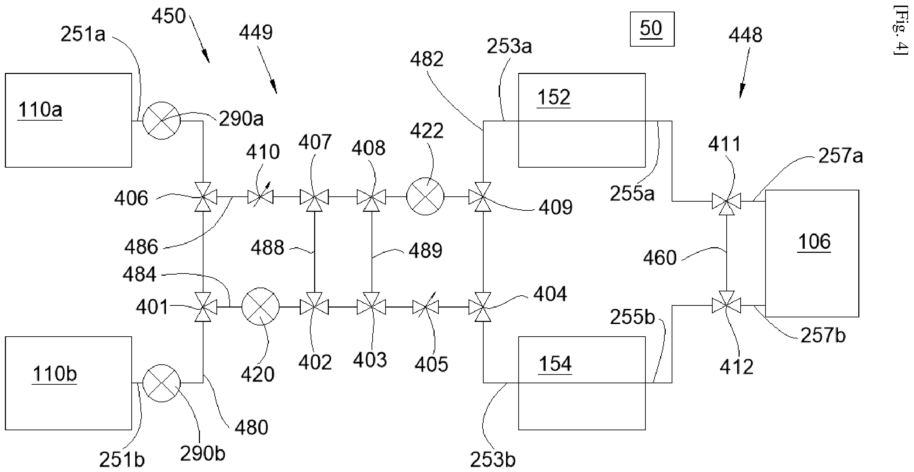

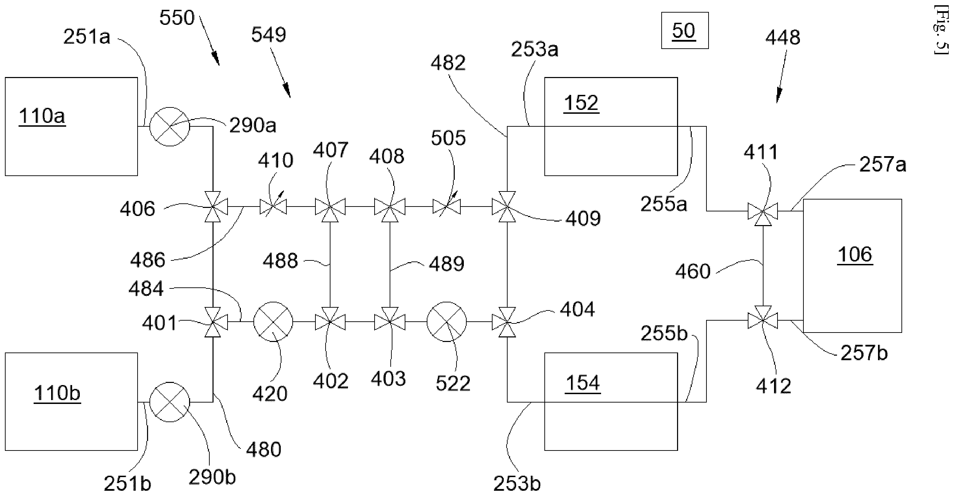

La Fig. 2 montre le système d'alimentation 250 selon une première variante d'un premier mode de réalisation, la Fig. 3 montre le système d'alimentation 350 selon une deuxième variante du premier mode de réalisation, la Fig. 4 montre le système d'alimentation 450 selon une première variante d'un deuxième mode de réalisation et la Fig. 5 montre le système d'alimentation 550 selon une deuxième variante du deuxième mode de réalisation.

Le système d'alimentation 250, 350, 450, 550 est arrangé entre deux réservoirs 110a-b et un moteur 106 et il y a alors un tel système d'alimentation 250, 350,450, 550 pour chaque moteur 106.

Pour réchauffer le dihydrogène et l'amener en phase gazeuse, le système d'alimentation 250, 350, 450, 550 comporte un premier réchauffeur 152 et un deuxième réchauffeur 154 qui sont montés en parallèle. Un tel réchauffeur 152, 154 est par exemple un échangeur thermique qui assure un échange de calories entre un fluide caloporteur chaud et le dihydrogène froid, ou un système avec une résistance chauffante. Selon les phases de vol, il peut être nécessaire d'avoir du dihydrogène qui ne passe que dans un seul des réchauffeurs 152 et 154, ou bien d'avoir du dihydrogène qui passe dans chaque réchauffeur 152, 154. Bien entendu, le système d'alimentation 250 peut comporter un seul réchauffeur, ou plus de deux réchauffeurs.

Comme cela est expliqué ci-dessous, le système d'alimentation 250, 350, 450, 550 comporte un mode de fonctionnement normal et un mode de fonctionnement dégradé lorsque l'un des éléments qui le compose n'est pas fonctionnel. En fonctionnement normal, des boucles de recirculation assurent un retour du dihydrogène vers une entrée du système d'alimentation 250, 350, 450, 550, et en cas d'incident, par exemple de panne, chaque boucle de recirculation peut être convertie en boucle de déviation qui transporte du dihydrogène vers le moteur 106, ce qui évite d'avoir à dupliquer les canalisations de transport du dihydrogène.

Le système d'alimentation 250, 350, 450, 550 comporte un module d'alimentation 249, 349,449, 549 qui est différent pour chaque variante de réalisation et qui comporte des moyens pour prélever le dihydrogène liquide dans les deux réservoirs 110a-b et alimenter les réchauffeurs 152 et 154 en parallèle. Ces moyens peuvent prendre la forme de canalisations, sur lesquelles sont agencées des pompes, et éventuellement des électrovannes, afin de prélever le dihydrogène des réservoirs 110a-b et d'alimenter les réchauffeurs 152 et 154. Le système d'alimentation 250, 350, 450, 550 comporte également un module de distribution 248, 448 qui est différent pour chaque mode de réalisation et qui comporte des moyens pour acheminer le dihydrogène des réchauffeurs 152 et 154 au moteur 106. Ces moyens peuvent prendre la forme de canalisations, sur lesquelles sont agencées des électrovannes afin d'acheminer le dihydrogène de circuler entre les réchauffeurs 152 et 154 et le moteur 106. Les canalisations dans lesquelles circule le dihydrogène peuvent être à simple peau, ou à double peau.

Le module de distribution 248, 348 n'est pas associé à un mode de réalisation particulier et le module de distribution 248 décrit avec le premier mode de réalisation peut être mis en œuvre avec le deuxième mode de réalisation et inversement, le module de distribution 448 décrit avec le deuxième mode de réalisation pouvant être mis en œuvre avec le premier mode de réalisation.

Le module d'alimentation 249, 349, 449, 549 comporte une première canalisation d'apport 251a fluidiquement connectée au premier réservoir 110a et une deuxième canalisation d'apport 251b fluidiquement connectée au deuxième réservoir 110b. Le module d'alimentation 249, 349, 449, 549 comporte également une première canalisation de sortie 253a et une deuxième canalisation de sortie 253b.

Le module d'alimentation 249, 349, 449, 549 comporte également des moyens pour canaliser le dihydrogène des canalisations d'apport 251a-b vers alternativement la première canalisation de sortie 253a ou la deuxième canalisation de sortie 253b ou les deux. Ces moyens peuvent prendre la forme de canalisations, sur lesquelles sont agencées des électrovannes afin d'autoriser ou d'empêcher le dihydrogène de circuler entre les canalisations d'apport 251a-b et les canalisations de sortie 253a-b.

Le module de distribution 248, 348 comporte, pour le premier réchauffeur 152, une première canalisation d'introduction 255a fluidiquement connectée à la première canalisation de sortie 253a à travers le premier réchauffeur 152. La première canalisation de sortie 253a et la première canalisation d'introduction 255a se prolongent l'une l'autre à travers le premier réchauffeur 152. De la même manière, le module de distribution 248, 348 comporte, pour le deuxième réchauffeur 154, une deuxième canalisation d'introduction 255b fluidiquement connectée à la deuxième canalisation de sortie 253b à travers le deuxième réchauffeur 154. La deuxième canalisation de sortie 253b et la deuxième canalisation d'introduction 255b se prolongent l'une l'autre à travers le deuxième réchauffeur 154.

Le module de distribution 248, 348 comporte également une première canalisation de distribution 257a et une deuxième canalisation de distribution 257b qui sont fluidiquement connectées au moteur 106.

Le module de distribution 248, 348 comporte également des moyens pour canaliser le dihydrogène des canalisations d'introduction 255a-b vers alternativement la première canalisation de distribution 257a ou la deuxième canalisation de distribution 257b ou les deux. Ces moyens peuvent prendre la forme de canalisations, sur lesquelles sont agencées des électrovannes afin d'autoriser ou d'empêcher le dihydrogène de circuler entre les canalisations d'introduction 255a-b et les canalisations de distribution 257a-b.

Le système d'alimentation 250, 350, 450, 550 comporte des moyens de détection prévus pour détecter un incident dans le module d'alimentation 249, 349, 449, 549 et/ou le module de distribution 248, 348 et/ou les réchauffeurs 152, 154, et une unité de contrôle 50 arrangée pour commander les moyens du module d'alimentation 249, 349, 449, 549 et les moyens du module de distribution 248, 348 en fonction des informations représentatives dudit incident détecté et délivrées par les moyens de détection.

Comme explicité ci-dessous, le module d'alimentation 249, 349, 449, 549 et le module de distribution 248, 348 sont constitués de canalisations et d'électrovannes. Lesdits moyens de détection sont alors par exemple prévus pour détecter une fuite d'hydrogène sur chaque canalisation du module d'alimentation 249, 349, 449, 549 et du module de distribution 248, 348, et chaque réchauffeur 152, 154, ou pour détecter un défaut de fonctionnement d'un réchauffeur 152, 154 ou d'une électrovanne.

Pour détecter un défaut de fonctionnement d'un réchauffeur 152, 154, ou d'une électrovanne, ou d'une pompe, les moyens de détection prennent par exemple la forme d'un système de surveillance intégré audit réchauffeur 152, 154, ou à l'électrovanne, ou à la pompe. Par exemple, pour un réchauffeur comprenant un fluide caloporteur circulant dans ledit réchauffeur, le système de surveillance peut comprendre un capteur de pression configuré pour détecter une variation (par exemple une baisse) de pression du fluide caloporteur circulant dans le réchauffeur. Selon un autre exemple, le système de surveillance comprend un capteur de température configuré pour détecter une température de l'hydrogène en sortie du réchauffeur et pour envoyer cette température détectée à un comparateur, le comparateur étant configuré pour vérifier que cette température détectée est comprise dans une plage de température prédéterminée, et pour émettre une alerte si la température détectée est en dehors de la plage de température prédéterminée.

Pour détecter une fuite de dihydrogène au niveau d'une canalisation, il est possible d'utiliser des canalisations à double peau où le dihydrogène circule dans la peau intérieure et où les moyens de détection prennent par exemple la forme de détecteurs ou de capteurs de dihydrogène disposés entre les deux peaux afin de détecter la présence de dihydrogène si la peau intérieure fuit.

Pour détecter une fuite de dihydrogène au niveau d'un réchauffeur 152, 154, il est possible d'enfermer chaque réchauffeur 152, 154 dans une boîte étanche où les moyens de détection prennent par exemple la forme d'un détecteur de dihydrogène arrangé dans ladite boîte.

Afin de détecter une présence de dihydrogène à l'extérieur du système d'alimentation 250, 350, c'est-à-dire autrement que sur une pompe, une électrovanne ou un réchauffeur, un capteur de dihydrogène peut être installé.

Un tel arrangement permet ainsi de guider le dihydrogène à partir des réservoirs 110a-b vers la ou les canalisations de sortie 253a-b puis vers la ou les canalisations de distribution 257a en fonction du mode de fonctionnement normal ou dégradé du système d'alimentation 250, 350, 450, 550 sans qu'il soit nécessaire de dupliquer le système d'alimentation 250, 350, 450, 550. La première canalisation d'apport 251a est équipée d'une première pompe principale 290a et la deuxième canalisation d'apport 251b est équipée d'une deuxième pompe principale 290b. Les pompes principales 290a-b sont commandées par l'unité de contrôle 50 et assurent le déplacement du dihydrogène de la canalisation d'apport 251a-b vers le module d'alimentation 249, 349, 449, 549.

Dans la première variante du premier mode de réalisation, le module d'alimentation 249 comporte une canalisation amont 280 et une canalisation aval 282. La canalisation amont 280 est fluidiquement connectée entre les canalisations d'apport 251a et 251b et la canalisation aval 282 est fluidiquement connectée entre la première canalisation de sortie 253a et la deuxième canalisation de sortie 253b.

Le module d'alimentation 249 comporte également une première canalisation de liaison 284 et une deuxième canalisation de liaison 286. La première canalisation de liaison 284 et la deuxième canalisation de liaison 286 sont fluidiquement connectées en parallèle entre la canalisation amont 280 et la canalisation aval 282.

Le module d'alimentation 249 comporte également une première sous-canalisation 288 et une deuxième sous-canalisation 289 fluidiquement connectées en parallèle entre la première canalisation de liaison 284 et la deuxième canalisation de liaison 286. La première sous-canalisation 288 est entre la canalisation amont 280 et la deuxième sous-canalisation 289, et par conséquent, la deuxième sous-canalisation 289 est entre la première sous-canalisation 288 et la canalisation aval 282.

Entre la canalisation amont 280 et la première sous-canalisation 288, le module d'alimentation 249 comporte, montées sur la première canalisation de liaison 284, une première électrovanne 201 à deux voies et entre la première électrovanne 201 et la première sous-canalisation 288, une première pompe secondaire 220 commandée par l'unité de contrôle 50 et qui assure le déplacement du dihydrogène vers le moteur 106.

Entre la première sous-canalisation 288 et la deuxième sous-canalisation 289, le module d'alimentation 249 comporte, montée sur la première canalisation de liaison 284, une deuxième électrovanne 202 à deux voies.

Entre la deuxième sous-canalisation 289 et la canalisation aval 282, le module d'alimentation 249 comporte, montée sur la première canalisation de liaison 284, une troisième électrovanne 203 de régulation à deux voies qui permet de régler le débit de dihydrogène dans la première canalisation de liaison 284 entre la deuxième sous-canalisation 289 et la canalisation aval 282. Le module d'alimentation 249 comporte également, montée sur la première canalisation de liaison 284, entre la troisième électrovanne 203 et la canalisation aval 282, une quatrième électrovanne 204 à deux voies.

Entre la canalisation amont 280 et le première sous-canalisation 288, le module d'alimentation 249 comporte, montées sur la deuxième canalisation de liaison 286, une cinquième électrovanne 205 à deux voies et entre la cinquième électrovanne 205 et la première sous-canalisation 288, une sixième électrovanne 206 de régulation à deux voies qui permet de régler le débit de dihydrogène dans la deuxième canalisation de liaison 286 entre la première sous-canalisation 288 et la canalisation amont 280.

Entre la première sous-canalisation 288 et la deuxième sous-canalisation 289, le module d'alimentation 249 comporte, montée sur la deuxième canalisation de liaison 286, une septième électrovanne 207 à deux voies.

Entre la deuxième sous-canalisation 289 et la canalisation aval 282, le module d'alimentation 249 comporte, montée sur la deuxième canalisation de liaison 286, une deuxième pompe secondaire 222 commandée par l'unité de contrôle 50 et qui assure le déplacement du dihydrogène vers le moteur 106. Le module d'alimentation 249 comporte également, montée sur la deuxième canalisation de liaison 286, entre la deuxième pompe secondaire 222 et la canalisation aval 282, une huitième électrovanne 208 à deux voies.

Le module d'alimentation 249 comporte, montée sur la première sous-canalisation 288, une neuvième électrovanne 209 à deux voies et montée sur la deuxième sous-canalisation 289, une dixième électrovanne 210 à deux voies.

Chaque électrovanne est commandée en ouverture et en fermeture par l'unité de contrôle 50 en fonction des besoins.

Chaque pompe est commandée par l'unité de contrôle 50 en fonction des besoins.

En fonctionnement normal, toutes les pompes sont actives et les électrovannes du module d'alimentation 249 sont ouvertes. Le dihydrogène est canalisé depuis les réservoirs 110a-b et entraîné par les pompes. Le dihydrogène s'écoule ainsi à travers la canalisation amont 280, la première électrovanne 201, la première pompe secondaire 220, puis il rejoint la deuxième pompe secondaire 222 et la huitième électrovanne 208 pour atteindre les canalisations de sortie 253a-b où il s'écoule à travers les réchauffeurs 152 et 154, puis à travers le module de distribution 248 et le moteur 106. Pour passer de la première canalisation de liaison 284 à la deuxième canalisation de liaison 286, le dihydrogène passe par les deuxième et dixième électrovannes 202 et 210, ou par les neuvième et septième électrovannes 209 et 207.

Dans le même temps, si besoin, du dihydrogène est prélevé au niveau de la quatrième électrovanne 204 pour rejoindre la deuxième pompe secondaire 222 ou la première pompe secondaire 220. Le dihydrogène s'écoule à travers la troisième électrovanne 203, puis la sixième électrovanne 206 et la cinquième électrovanne 205. Pour passer de la deuxième canalisation de liaison 286 à la première canalisation de liaison 284, le dihydrogène passe par les dixième et septième électrovannes 210 et 207 ou par les deuxième et neuvième électrovannes 202 et 209. Au niveau de la dixième électrovanne 210, le dihydrogène peut rejoindre la deuxième pompe secondaire 222.

La quantité de dihydrogène qui va recirculer dépend du degré d'ouverture des troisième et sixièmes électrovannes 203 et 206.

En cas d'incident au niveau de la première pompe secondaire 220, l'unité de contrôle 50 commande la fermeture des première 201, deuxième 202 et neuvième 209 électrovannes pour isoler la première pompe secondaire 220. Le dihydrogène passe alors par la deuxième canalisation de liaison 286 pour rejoindre la deuxième pompe secondaire 222 et il n'y a plus de recirculation à travers la sixième électrovanne 206 mais elle peut continuer à travers la troisième électrovanne 203.

En cas d'incident au niveau de la deuxième pompe secondaire 222, l'unité de contrôle 50 commande la fermeture des septième 207, huitième 208 et dixième 210 électrovannes pour isoler la deuxième pompe secondaire 222. Le dihydrogène passe alors uniquement par la première canalisation de liaison 284 pour rejoindre les canalisations de sortie 253a-b et il n'y a plus de recirculation à travers la troisième électrovanne 203 mais elle peut continuer à travers la sixième électrovanne 206.

En cas d'incident au niveau de la sixième électrovanne 206, l'unité de contrôle 50 commande la fermeture des cinquième 205, septième 207 et neuvième 209 électrovannes pour isoler la sixième électrovanne 206. Le dihydrogène passe alors par la voie normale mais uniquement à travers les deuxième 202 et dixième 210 électrovannes entre la première canalisation de liaison 284 et la deuxième canalisation de liaison 286, et il n'y a plus de recirculation à travers la sixième électrovanne 206 mais elle peut continuer à travers la troisième électrovanne 203. En cas d'incident au niveau de la troisième électrovanne 203, l'unité de contrôle 50 commande la fermeture des deuxième 202, quatrième 204 et dixième 210 électrovannes pour isoler la troisième électrovanne 203. Le dihydrogène passe alors par la voie normale mais uniquement à travers les neuvième 209 et septième 207 électrovannes entre la première canalisation de liaison 284 et la deuxième canalisation de liaison 286, et il n'y a plus de recirculation à travers la troisième électrovanne 203 mais elle peut continuer à travers la sixième électrovanne 206.

En cas de fuite de dihydrogène sur la partie de la première canalisation de liaison 284 entre la première électrovanne 201 et la deuxième électrovanne 202, l'unité de contrôle 50 commande la fermeture de la première électrovanne 201 et de la deuxième électrovanne 202 et de la neuvième électrovanne 209.

Le même principe s'applique pour chaque partie de la première canalisation de liaison 284 et de la deuxième canalisation de liaison 286, où l'unité de contrôle 50 commande la fermeture des électrovannes qui sont de part et d'autre de la fuite et sur la même canalisation de liaison 284, 286 et la fermeture de l'électrovanne de la sous-canalisation 288, 289 qui est en communication fluidique avec ladite partie.

Dans la deuxième variante du premier mode de réalisation, le module d'alimentation 349 est identique au module d'alimentation 249 de la première variante du premier mode de réalisation, sauf que la deuxième pompe secondaire 322 et la troisième électrovanne 303 sont interverties. Ainsi la deuxième pompe secondaire 322 est montée sur la première canalisation de liaison 284 entre la deuxième sous-canalisation 289 et la quatrième électrovanne 204, et la troisième électrovanne 303 est montée sur la deuxième canalisation de liaison 286 entre la deuxième sous-canalisation 289 et la huitième électrovanne 208.

Le fonctionnement du module d'alimentation 349 selon la deuxième variante est similaire à celui du module d'alimentation 249 selon la première variante sauf qu'en fonctionnement normal, le dihydrogène s'écoule des réservoirs 110a-b jusqu'aux canalisations de sortie 253a-b en passant uniquement par la première canalisation de liaison 284 tandis que la deuxième canalisation de liaison 286 sert à la recirculation du dihydrogène.

Comme précédemment, en cas d'incident au niveau d'un élément du module d'alimentation 349, l'unité de contrôle 50 commande la fermeture des électrovannes qui assurent l'isolement dudit élément, c'est-à-dire les deux électrovannes qui sont de part et d'autre dudit élément sur la même canalisation de liaison 284, 286 que ce dernier et l'électrovanne qui est entre ledit élément et l'une desdites deux électrovannes et sur une des sous-canalisations 288, 289. Pour isoler les pompes principales 290a-b, par exemple pour les remplacer lors d'opérations de maintenance, le module d'alimentation 249, 349 comporte, montées sur la canalisation amont 280, trois électrovannes qui sont commandées par l'unité de contrôle 50 où une électrovanne est disposée entre la première pompe principale 290a et la deuxième canalisation de liaison 286, une électrovanne est disposée entre la deuxième canalisation de liaison 286 et la première canalisation de liaison 284 et une électrovanne est disposée entre la première canalisation de liaison 284 et la deuxième pompe principale 290b.

Pour isoler les réchauffeurs 152 et 154, par exemple pour les remplacer lors d'opérations de maintenance, le module d'alimentation 249, 349 comporte, montées sur la canalisation aval 282, trois électrovannes qui sont commandées par l'unité de contrôle 50 où une électrovanne est disposée entre le premier réchauffeur 152 et la deuxième canalisation de liaison 286, une électrovanne est disposée entre la deuxième canalisation de liaison 286 et la première canalisation de liaison 284 et une électrovanne est disposée entre la première canalisation de liaison 284 et le deuxième réchauffeur 154.

Dans la première variante du deuxième mode de réalisation, le module d'alimentation 449 comporte une canalisation amont 480 et une canalisation aval 482. La canalisation amont 480 est fluidiquement connectée entre les canalisations d'apport 251a et 251b et la canalisation aval 482 est fluidiquement connectée entre la première canalisation de sortie 253a et la deuxième canalisation de sortie 253b.

Le module d'alimentation 449 comporte également une première canalisation de liaison 484 et une deuxième canalisation de liaison 486. La première canalisation de liaison 484 et la deuxième canalisation de liaison 486 sont fluidiquement connectées en parallèle entre la canalisation amont 480 et la canalisation aval 482.

Le module d'alimentation 449 comporte également une première sous-canalisation 488 et une deuxième sous-canalisation 489 fluidiquement connectées en parallèle entre la première canalisation de liaison 484 et la deuxième canalisation de liaison 486. La première sous-canalisation 488 est entre la canalisation amont 480 et la deuxième sous-canalisation 489, et par conséquent, la deuxième sous-canalisation 489 est entre la première sous-canalisation 488 et la canalisation aval 482.

À la connexion entre la canalisation amont 480 et la première canalisation de liaison 484, le module d'alimentation 449 comporte une première électrovanne 401 à trois voies avec deux voies fluidiquement connectées à la canalisation amont 480 et une voie fluidiquement connectée à la première canalisation de liaison 484.

À la connexion entre la première canalisation de liaison 484 et la première sous-canalisation 488, le module d'alimentation 449 comporte une deuxième électrovanne 402 à trois voies avec deux voies fluidiquement connectées à la première canalisation de liaison 484 et une voie fluidiquement connectée à la première sous-canalisation 488.

À la connexion entre la première canalisation de liaison 484 et la deuxième sous-canalisation 489, le module d'alimentation 449 comporte une troisième électrovanne 403 à trois voies avec deux voies fluidiquement connectées à la première canalisation de liaison 484 et une voie fluidiquement connectée à la deuxième sous-canalisation 489.

À la connexion entre la canalisation aval 482 et la première canalisation de liaison 484, le module d'alimentation 449 comporte une quatrième électrovanne 404 à trois voies avec deux voies fluidiquement connectées à la canalisation aval 482 et une voie fluidiquement connectée à la première canalisation de liaison 484.

Entre la première électrovanne 401 et la deuxième électrovanne 402, le module d'alimentation 449 comporte, montée sur la première canalisation de liaison 484, une première pompe secondaire 420 qui assure le déplacement du dihydrogène vers le moteur 106.

Entre la troisième électrovanne 403 et la quatrième électrovanne 404, le module d'alimentation 449 comporte, montée sur la première canalisation de liaison 484, une cinquième électrovanne 405 de régulation à deux voies qui permet de régler le débit de dihydrogène dans la première canalisation de liaison 484 entre la deuxième sous-canalisation 489 et la canalisation aval 482.

À la connexion entre la canalisation amont 480 et la deuxième canalisation de liaison 486, le module d'alimentation 449 comporte une sixième électrovanne 406 à trois voies avec deux voies fluidiquement connectées à la canalisation amont 480 et une voie fluidiquement connectée à la deuxième canalisation de liaison 486.

À la connexion entre la deuxième canalisation de liaison 486 et la première sous-canalisation 488, le module d'alimentation 449 comporte une septième électrovanne 407 à trois voies avec deux voies fluidiquement connectées à la deuxième canalisation de liaison 486 et une voie fluidiquement connectée à la première sous-canalisation 488.

À la connexion entre la deuxième canalisation de liaison 486 et la deuxième sous-canalisation 489, le module d'alimentation 449 comporte une huitième électrovanne 408 à trois voies avec deux voies fluidiquement connectées à la deuxième canalisation de liaison 486 et une voie fluidiquement connectée à la deuxième sous-canalisation 489.

À la connexion entre la canalisation aval 482 et la deuxième canalisation de liaison 486, le module d'alimentation 449 comporte une neuvième électrovanne 409 à trois voies avec deux voies fluidiquement connectées à la canalisation aval 482 et une voie fluidiquement connectée à la deuxième canalisation de liaison 486.

Entre la sixième électrovanne 406 et la septième électrovanne 407, le module d'alimentation 449 comporte, montée sur la deuxième canalisation de liaison 486, une dixième électrovanne 410 de régulation à deux voies qui permet de régler le débit de dihydrogène dans la deuxième canalisation de liaison 486 entre la première sous-canalisation 488 et la canalisation amont 480.

Entre la huitième électrovanne 408 et la neuvième électrovanne 409, le module d'alimentation 449 comporte, montée sur la deuxième canalisation de liaison 486, une deuxième pompe secondaire 422 qui assure le déplacement du dihydrogène vers le moteur 106.

Chaque électrovanne est commandée en ouverture et en fermeture par l'unité de contrôle 50 en fonction des besoins.

Chaque pompe est commandée par l'unité de contrôle 50 en fonction des besoins.

En fonctionnement normal, toutes les pompes sont actives et les électrovannes du module d'alimentation 449 sont ouvertes. Le dihydrogène est canalisé depuis les réservoirs 110a-b et entraîné par les pompes. Le dihydrogène s'écoule ainsi à travers la canalisation amont 480, la première électrovanne 401, la première pompe secondaire 420, puis il rejoint la deuxième pompe secondaire 422 et la neuvième électrovanne 409 pour atteindre les canalisations de sortie 253a-b où il s'écoule à travers les réchauffeurs 152 et 154, puis à travers le module de distribution 448 et le moteur 106. Pour passer de la première canalisation de liaison 484 à la deuxième canalisation de liaison 486, le dihydrogène passe par les deuxième 402, troisième 403, septième 407 et huitième 408 électrovannes.

Dans le même temps, si besoin, du dihydrogène est prélevé au niveau de la quatrième électrovanne 404 pour rejoindre la deuxième pompe secondaire 422 ou la première pompe secondaire 420. Le dihydrogène s'écoule à travers la cinquième électrovanne 405, puis la dixième électrovanne 410 et la sixième électrovanne 406. Pour passer de la deuxième canalisation de liaison 486 à la première canalisation de liaison 484, le dihydrogène passe par les deuxième 402, troisième 403, septième 407 et huitième 408 électrovannes. Au niveau de la huitième électrovanne 408, le dihydrogène peut rejoindre la deuxième pompe secondaire 422.

La quantité de dihydrogène qui va recirculer dépend du degré d'ouverture des cinquième 405 et dixième 410 électrovannes.

En cas d'incident au niveau de la première pompe secondaire 420, l'unité de contrôle 50 commande la fermeture de la voie de la première électrovanne 401 et de la voie de la deuxième électrovanne 402 qui sont fluidiquement connectées à la première canalisation de liaison 484 pour isoler la première pompe secondaire 420. Le dihydrogène passe alors par la deuxième canalisation de liaison 486 pour rejoindre la deuxième pompe secondaire 422 et il n'y a plus de recirculation à travers la dixième électrovanne 410, mais elle peut continuer à travers la cinquième électrovanne 405.

En cas d'incident au niveau de la deuxième pompe secondaire 422, l'unité de contrôle 50 commande la fermeture de la voie de la huitième électrovanne 408 et de la voie de la neuvième électrovanne 409 qui sont fluidiquement connectées à la deuxième canalisation de liaison 486 pour isoler la deuxième pompe secondaire 422. Le dihydrogène passe alors uniquement par la première canalisation de liaison 484 pour rejoindre les canalisations de sortie 253a-b et il n'y a plus de recirculation à travers la cinquième électrovanne 405 mais elle peut continuer à travers la dixième électrovanne 410.

En cas d'incident au niveau de la dixième électrovanne 410, l'unité de contrôle 50 commande la fermeture de la voie de la sixième électrovanne 406 et de la voie de la septième électrovanne 407 qui sont fluidiquement connectées à la deuxième canalisation de liaison 486 pour isoler la dixième électrovanne 410. Le dihydrogène passe alors par la voie normale mais il n'y a plus de recirculation à travers la dixième électrovanne 410, mais elle peut continuer à travers la cinquième électrovanne 405.

En cas d'incident au niveau de la cinquième électrovanne 405, l'unité de contrôle 50 commande la fermeture de la voie de la troisième électrovanne 403 et de la voie de la quatrième électrovanne 404 qui sont fluidiquement connectées à la deuxième canalisation de liaison 486 pour isoler la cinquième électrovanne 405. Le dihydrogène passe alors par la voie normale mais il n'y a plus de recirculation à travers la cinquième électrovanne 405 mais elle peut continuer à travers la dixième électrovanne 410.

Dans la deuxième variante du deuxième mode de réalisation, le module d'alimentation 549 est identique au module d'alimentation 449 de la première variante du deuxième mode de réalisation, sauf en ce que la deuxième pompe secondaire 522 et la cinquième électrovanne 505 sont interverties. Ainsi la deuxième pompe secondaire 522 est montée sur la première canalisation de liaison 484 entre la troisième électrovanne 403 et la quatrième électrovanne 404, et la cinquième électrovanne 505 est montée sur la deuxième canalisation de liaison 486 entre la huitième électrovanne 408 et la neuvième électrovanne 409.

Le fonctionnement du module d'alimentation 549 selon la deuxième variante est similaire à celui du module d'alimentation 449 selon la première variante sauf qu'en fonctionnement normal, le dihydrogène s'écoule des réservoirs 110a-b jusqu'aux canalisations de sortie 253a-b en passant uniquement par la première canalisation de liaison 484 tandis que la deuxième canalisation de liaison 486 sert à la recirculation du dihydrogène.

Comme précédemment, en cas d'incident au niveau d'un élément du module d'alimentation 549, l'unité de contrôle 50 commande la fermeture des voies des électrovannes qui assurent l'isolement dudit élément, c'est-à-dire les deux voies qui sont de part et d'autre dudit élément sur la même canalisation de liaison 484, 486 que ce dernier.

En cas de fuite de dihydrogène sur la partie de la première canalisation de liaison 484 entre la première électrovanne 401 et la deuxième électrovanne 402, l'unité de contrôle 50 commande la fermeture de la voie de la première électrovanne 401 et de la voie de la deuxième électrovanne 402.

Le même principe s'applique pour chaque partie de la première canalisation de liaison 484 et de la deuxième canalisation de liaison 486, où l'unité de contrôle 50 commande la fermeture des voies des électrovannes qui sont de part et d'autre de la fuite et sur la même canalisation de liaison 484, 486.

La Fig. 2 et la Fig. 3 montrent le module de distribution 248 selon une première variante et la Fig. 4 et la Fig. 5 montrent le module de distribution 448 selon une deuxième variante. Bien que le module de distribution 248 selon la première variante soit associé au système d'alimentation 250, 350 selon le premier mode de réalisation et que le module de distribution 448 selon la deuxième variante soit associé au système d'alimentation 450, 550 selon le deuxième mode de réalisation, il est possible d'utiliser le module de distribution 248 selon la première variante avec le système d'alimentation 450, 550 selon le deuxième mode de réalisation et le module de distribution 448 selon la deuxième variante avec le système d'alimentation 250, 350 selon le premier mode de réalisation.

Selon la première variante du module de distribution 248, la première canalisation d'introduction 255a est fluidiquement connectée à la première canalisation de distribution 257a et la deuxième canalisation d'introduction 255b est fluidiquement connectée à la deuxième canalisation de distribution 257b.

Le module de distribution 248 comporte une canalisation de déviation 260 fluidiquement connectée entre la première canalisation d'introduction 255a et la deuxième canalisation d'introduction 255b et une onzième électrovanne 211 à deux voies montée sur la canalisation de déviation 260.

Le module de distribution 248 comporte également, entre le premier réchauffeur 152 et la canalisation de déviation 260, une douzième électrovanne 212 à deux voies montée sur la première canalisation d'introduction 255a et, entre la canalisation de déviation 260 et le moteur 106, une treizième électrovanne 213 montée sur la première canalisation de distribution 257a.

Le module de distribution 248 comporte également, entre le deuxième réchauffeur 154 et la canalisation de déviation 260, une quatorzième électrovanne 214 à deux voies montée sur la deuxième canalisation d'introduction 255b et, entre la canalisation de déviation 260 et le moteur 106, une quinzième électrovanne 215 montée sur la deuxième canalisation de distribution 257b.

Chaque électrovanne est commandée en ouverture et en fermeture par l'unité de contrôle 50. Un tel système permet de diriger le dihydrogène vers le moteur 106, qu'il provienne du premier réchauffeur 152 ou du deuxième réchauffeur 154.

Si une fuite apparaît entre le premier réchauffeur 152 et la douzième électrovanne 212, l'unité de contrôle 50 commande la fermeture de la douzième électrovanne 212 et le dihydrogène circule uniquement à travers la deuxième canalisation d'introduction 255b puis la première canalisation de distribution 257a et/ou la deuxième canalisation de distribution 257b.

Le principe est le même pour les autres canalisations du module de distribution 248 qui peuvent être isolées en cas de fuite.

Selon la deuxième variante du module de distribution 448, la première canalisation d'introduction 255a est fluidiquement connectée à la première canalisation de distribution 257a et la deuxième canalisation d'introduction 255b est fluidiquement connectée à la deuxième canalisation de distribution 257b.

Le module de distribution 448 comporte une canalisation de déviation 460 fluidiquement connectée entre la première canalisation d'introduction 255a et la deuxième canalisation d'introduction 255b.

À la connexion entre la première canalisation d'introduction 255a et la canalisation de déviation 460, le module de distribution 448 comporte une onzième électrovanne 411 à trois voies où une voie est fluidiquement connectée à la première canalisation d'introduction 255a, une voie est fluidiquement connectée à la canalisation de déviation 460 et une voie est fluidiquement connectée à la première canalisation de distribution 257a.

À la connexion entre la deuxième canalisation d'introduction 255b et la canalisation de déviation 460, le module de distribution 448 comporte une douzième électrovanne 412 à trois voies où une voie est fluidiquement connectée à la deuxième canalisation d'introduction 255b, une voie est fluidiquement connectée à la canalisation de déviation 460 et une voie est fluidiquement connectée à la deuxième canalisation de distribution 257b.

Chaque électrovanne est commandée en ouverture et en fermeture par l'unité de contrôle 50. Un tel système permet de diriger le dihydrogène vers le moteur 106 qu'il provienne du premier réchauffeur 152 ou du deuxième réchauffeur 154.

Si une fuite apparaît entre le premier réchauffeur 152 et la onzième électrovanne 411, l'unité de contrôle 50 commande la fermeture de la voie de la onzième électrovanne 411 qui est fluidiquement connectée à la première canalisation d'introduction 255a et le dihydrogène circule uniquement à travers la deuxième canalisation d'introduction 255b puis la première canalisation de distribution 257a et/ou la deuxième canalisation de distribution 257b.

Le principe est le même pour les autres canalisations du module de distribution 448 qui peuvent être isolées en cas de fuite.

Selon un mode de réalisation, l'unité de contrôle 50 comporte, reliés par un bus de communication : un processeur ou CPU (« Central Processing Unit » en anglais) ; une mémoire vive RAM (« Random Access Memory » en anglais) ; une mémoire morte ROM (« Read Only Memory » en anglais) ; une unité de stockage telle qu'un disque dur ou un lecteur de support de stockage, tel qu'un lecteur de cartes SD (« Secure Digital » en anglais) ; au moins une interface de communication, permettant par exemple à l'unité de contrôle de communiquer avec les électrovannes, les pompes, etc.

Le processeur est capable d'exécuter des instructions chargées dans la RAM à partir de la ROM, d'une mémoire externe (non représentée), d'un support de stockage (tel qu'une carte SD), ou d'un réseau de communication. Lorsque l'équipement est mis sous tension, le processeur est capable de lire de la RAM des instructions et de les exécuter. Ces instructions forment un programme d'ordinateur causant la mise en œuvre, par le processeur, de tout ou partie des algorithmes et étapes décrits.

Tout ou partie des algorithmes et étapes décrits ci-après peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais).

## Revendications

1. Système d'alimentation (250, 350, 450, 550) pour un aéronef (100) comportant un premier et un deuxième réservoirs (110a-b) de dihydrogène et un moteur (106), ledit système d'alimentation (250, 350, 450, 550) comportant :
- un module d'alimentation (249, 349, 449, 549) comportant une première canalisation de sortie (253a), une deuxième canalisation de sortie (253b), une première canalisation d'apport (251a) équipée d'une première pompe principale (290a) et destinée à être fluidiquement connectée au premier réservoir (110a), une deuxième canalisation d'apport (251b) équipée d'une deuxième pompe principale (290b) et destinée à être fluidiquement connectée au deuxième réservoir (110b) et des moyens arrangés pour canaliser le dihydrogène des première et deuxième canalisations d'apport (251a-b) vers alternativement la première canalisation de sortie (253a) ou la deuxième canalisation de sortie (253b) ou les deux,
- un premier réchauffeur (152),
- un deuxième réchauffeur (154),
- un module de distribution (248, 348) comportant une première canalisation d'introduction (255a) fluidiquement connectée à la première canalisation de sortie (253a) à travers le premier réchauffeur (152), une deuxième canalisation d'introduction (255b) fluidiquement connectée à la deuxième canalisation de sortie (253b) à travers le deuxième réchauffeur (154), une première canalisation de distribution (257a) et une deuxième canalisation de distribution (257b) destinées à être fluidiquement connectées au moteur (106), et des moyens pour canaliser le dihydrogène des première et deuxième canalisations d'introduction (255a-b) vers alternativement la première canalisation de distribution (257a) ou la deuxième canalisation de distribution (257b) ou les deux,
- des moyens de détection prévus pour détecter un incident dans le module d'alimentation (249, 349, 449, 549), et/ou le module de distribution (248, 348), et/ou les premier et deuxième réchauffeurs (152, 154), et pour délivrer des informations représentatives dudit incident détecté, et
- une unité de contrôle (50) arrangée pour commander les moyens du module d'alimentation (249, 349, 449, 549) et/ou les moyens du module de distribution (248, 348) en fonction des informations délivrées par les moyens de détection.

2. Système d'alimentation (250) selon la revendication 1, **caractérisé en ce que** le module d'alimentation (249) comporte :
- une canalisation amont (280) fluidiquement connectée entre les première et deuxième canalisations d'apport (251a, 251b),
- une canalisation aval (282) fluidiquement connectée entre la première canalisation de sortie (253a) et la deuxième canalisation de sortie (253b),
- une première canalisation de liaison (284) et une deuxième canalisation de liaison (286) fluidiquement connectées en parallèle entre la canalisation amont (280) et la canalisation aval (282),
- une première sous-canalisation (288) et une deuxième sous-canalisation (289) fluidiquement connectées en parallèle entre la première canalisation de liaison (284) et la deuxième canalisation de liaison (286),
- une première électrovanne (201) à deux voies montée sur la première canalisation de liaison (284) entre la canalisation amont (280) et la première sous-canalisation (288),
- une première pompe secondaire (220) montée sur la première canalisation de liaison (284) entre la première électrovanne (201) et la première sous-canalisation (288),
- une deuxième électrovanne (202) à deux voies montée sur la première canalisation de liaison (284) entre la première sous-canalisation (288) et la deuxième sous-canalisation (289),
- une troisième électrovanne (203) de régulation à deux voies montée sur la première canalisation de liaison (284) entre la deuxième sous-canalisation (289) et la canalisation aval (282),
- une quatrième électrovanne (204) à deux voies montée sur la première canalisation de liaison (284), entre la troisième électrovanne (203) et la canalisation aval (282),
- une cinquième électrovanne (205) à deux voies montée sur la deuxième canalisation de liaison (286) entre la canalisation amont (280) et la première sous-canalisation (288),
- une sixième électrovanne (206) de régulation à deux voies montée sur la deuxième canalisation de liaison (286) entre la cinquième électrovanne (205) et la première sous-canalisation (288),
- une septième électrovanne (207) à deux voies montée sur la deuxième canalisation de liaison (286) entre la première sous-canalisation (288) et la deuxième sous-canalisation (289),
- une deuxième pompe secondaire (222) montée sur la deuxième canalisation de liaison (286) entre la deuxième sous-canalisation (289) et la canalisation aval (282),
- une huitième électrovanne (208) à deux voies montée sur la deuxième canalisation de liaison (286) entre la deuxième pompe secondaire (222) et la canalisation aval (282),
- une neuvième électrovanne (209) à deux voies montée sur la première sous-canalisation (288), et
- une dixième électrovanne (210) à deux voies montée sur la deuxième sous-canalisation (289).

3. Système d'alimentation (350) selon la revendication 1, **caractérisé en ce que** le module d'alimentation (349) comporte :
- une canalisation amont (280) fluidiquement connectée entre les première et deuxième canalisations d'apport (251a, 251b),
- une canalisation aval (282) fluidiquement connectée entre la première canalisation de sortie (253a) et la deuxième canalisation de sortie (253b),
- une première canalisation de liaison (284) et une deuxième canalisation de liaison (286) fluidiquement connectées en parallèle entre la canalisation amont (280) et la canalisation aval (282),
- une première sous-canalisation (288) et une deuxième sous-canalisation (289) fluidiquement connectées en parallèle entre la première canalisation de liaison (284) et la deuxième canalisation de liaison (286),
- une première électrovanne (201) à deux voies montée sur la première canalisation de liaison (284) entre la canalisation amont (280) et la première sous-canalisation (288),
- une première pompe secondaire (220) montée sur la première canalisation de liaison (284) entre la première électrovanne (201) et la première sous-canalisation (288),
- une deuxième électrovanne (202) à deux voies montée sur la première canalisation de liaison (284) entre la première sous-canalisation (288) et la deuxième sous-canalisation (289),
- une deuxième pompe secondaire (322) montée sur la première canalisation de liaison (284) entre la deuxième sous-canalisation (289) et la quatrième électrovanne (204),
- une quatrième électrovanne (204) à deux voies montée sur la première canalisation de liaison (284), entre la troisième électrovanne (203) et la canalisation aval (282),
- une cinquième électrovanne (205) à deux voies montée sur la deuxième canalisation de liaison (286) entre la canalisation amont (280) et la première sous-canalisation (288),
- une sixième électrovanne (206) de régulation à deux voies montée sur la deuxième canalisation de liaison (286) entre la cinquième électrovanne (205) et la première sous-canalisation (288),
- une septième électrovanne (207) à deux voies montée sur la deuxième canalisation de liaison (286) entre la première sous-canalisation (288) et la deuxième sous-canalisation (289),
- une troisième électrovanne (303) montée sur la deuxième canalisation de liaison (286) entre la deuxième sous-canalisation (289) et la canalisation aval (282),
- une huitième électrovanne (208) à deux voies montée sur la deuxième canalisation de liaison (286) entre la deuxième pompe secondaire (222) et la canalisation aval (282),
- une neuvième électrovanne (209) à deux voies montée sur la première sous-canalisation (288), et
- une dixième électrovanne (210) à deux voies montée sur la deuxième sous-canalisation (289).

4. Système d'alimentation (450) selon la revendication 1, **caractérisé en ce que** le module d'alimentation (449) comporte :
- une canalisation amont (480) fluidiquement connectée entre les première et deuxième canalisations d'apport (251a, 251b),
- une canalisation aval (482) fluidiquement connectée entre la première canalisation de sortie (253a) et la deuxième canalisation de sortie (253b),
- une première canalisation de liaison (484) et une deuxième canalisation de liaison (486) qui sont fluidiquement connectées en parallèle entre la canalisation amont (480) et la canalisation aval (482),
- une première sous-canalisation (488) et une deuxième sous-canalisation (489) fluidiquement connectées en parallèle entre la première canalisation de liaison (484) et la deuxième canalisation de liaison (486),
- à la connexion entre la canalisation amont (480) et la première canalisation de liaison (484), une première électrovanne (401) à trois voies,
- à la connexion entre la première canalisation de liaison (484) et la première sous-canalisation (488), une deuxième électrovanne (402) à trois voies,
- à la connexion entre la première canalisation de liaison (484) et la deuxième sous-canalisation (489), une troisième électrovanne (403) à trois voies,
- à la connexion entre la canalisation aval (482) et la première canalisation de liaison (484), une quatrième électrovanne (404) à trois voies,
- entre la première électrovanne (401) et la deuxième électrovanne (402), une première pompe secondaire (420),
- entre la troisième électrovanne (403) et la quatrième électrovanne (404), une cinquième électrovanne (405) de régulation à deux voies,
- à la connexion entre la canalisation amont (480) et la deuxième canalisation de liaison (486), une sixième électrovanne (406) à trois voies,
- à la connexion entre la deuxième canalisation de liaison (486) et la première sous-canalisation (488), une septième électrovanne (407) à trois voies,
- à la connexion entre la deuxième canalisation de liaison (486) et la deuxième sous-canalisation (489), une huitième électrovanne (408) à trois voies,
- à la connexion entre la canalisation aval (482) et la deuxième canalisation de liaison (486), une neuvième électrovanne (409) à trois voies,
- entre la sixième électrovanne (406) et la septième électrovanne (407), une dixième électrovanne (410) de régulation à deux voies, et
- entre la huitième électrovanne (408) et la neuvième électrovanne (409), une deuxième pompe secondaire (422).

5. Système d'alimentation (550) selon la revendication 1, **caractérisé en ce que** le module d'alimentation (549) comporte :
- une canalisation amont (480) fluidiquement connectée entre les première et deuxième canalisations d'apport (251a, 251b),
- une canalisation aval (482) fluidiquement connectée entre la première canalisation de sortie (253a) et la deuxième canalisation de sortie (253b),
- une première canalisation de liaison (484) et une deuxième canalisation de liaison (486) qui sont fluidiquement connectées en parallèle entre la canalisation amont (480) et la canalisation aval (482),
- une première sous-canalisation (488) et une deuxième sous-canalisation (489) fluidiquement connectées en parallèle entre la première canalisation de liaison (484) et la deuxième canalisation de liaison (486),
- à la connexion entre la canalisation amont (480) et la première canalisation de liaison (484), une première électrovanne (401) à trois voies,
- à la connexion entre la première canalisation de liaison (484) et la première sous-canalisation (488), une deuxième électrovanne (402) à trois voies,
- à la connexion entre la première canalisation de liaison (484) et la deuxième sous-canalisation (489), une troisième électrovanne (403) à trois voies,
- à la connexion entre la canalisation aval (482) et la première canalisation de liaison (484), une quatrième électrovanne (404) à trois voies,
- entre la première électrovanne (401) et la deuxième électrovanne (402), une première pompe secondaire (420),
- entre la troisième électrovanne (403) et la quatrième électrovanne (404), une deuxième pompe secondaire (522),
- à la connexion entre la canalisation amont (480) et la deuxième canalisation de liaison (486), une sixième électrovanne (406) à trois voies,
- à la connexion entre la deuxième canalisation de liaison (486) et la première sous-canalisation (488), une septième électrovanne (407) à trois voies,
- à la connexion entre la deuxième canalisation de liaison (486) et la deuxième sous-canalisation (489), une huitième électrovanne (408) à trois voies,
- à la connexion entre la canalisation aval (482) et la deuxième canalisation de liaison (486), une neuvième électrovanne (409) à trois voies,
- entre la sixième électrovanne (406) et la septième électrovanne (407), une dixième électrovanne (410) de régulation à deux voies, et
- entre la huitième électrovanne (408) et la neuvième électrovanne (409), une cinquième électrovanne (505) de régulation à deux voies.

6. Système d'alimentation (250, 350, 450, 550) selon l'une des revendications 1 à 5, **caractérisé en ce que** la première canalisation d'introduction (255a) est fluidiquement connectée à la première canalisation de distribution (257a), **en ce que** la deuxième canalisation d'introduction (255b) est fluidiquement connectée à la deuxième canalisation de distribution (257b), et **en ce que** le module de distribution (248) comporte :
- une canalisation de déviation (260) fluidiquement connectée entre la première canalisation d'introduction (255a) et la deuxième canalisation d'introduction (255b),
- une onzième électrovanne (211) à deux voies montée sur la canalisation de déviation (260),
- entre le premier réchauffeur (152) et la canalisation de déviation (260), une douzième électrovanne (212) à deux voies montée sur la première canalisation d'introduction (255a),
- entre la canalisation de déviation (260) et le moteur (106), une treizième électrovanne (213) montée sur la première canalisation de distribution (257a),
- entre le deuxième réchauffeur (154) et la canalisation de déviation (260), une quatorzième électrovanne (214) à deux voies montée sur la deuxième canalisation d'introduction (255b), et
- entre la canalisation de déviation (260) et le moteur (106), une quinzième électrovanne (215) montée sur la deuxième canalisation de distribution (257b).

7. Système d'alimentation (250, 350, 450, 550) selon l'une des revendications 1 à 5, **caractérisé en ce que** la première canalisation d'introduction (255a) est fluidiquement connectée à la première canalisation de distribution (257a), **en ce que** la deuxième canalisation d'introduction (255b) est fluidiquement connectée à la deuxième canalisation de distribution (257b), et **en ce que** le module de distribution (448) comporte :
- une canalisation de déviation (460) fluidiquement connectée entre la première canalisation d'introduction (255a) et la deuxième canalisation d'introduction (255b),
- à la connexion entre la première canalisation d'introduction (255a) et la canalisation de déviation (460), une onzième électrovanne (411) à trois voies où une voie est fluidiquement connectée à la première canalisation d'introduction (255a), une voie est fluidiquement connectée à la canalisation de déviation (460) et une voie est fluidiquement connectée à la première canalisation de distribution (257a),
- à la connexion entre la deuxième canalisation d'introduction (255b) et la canalisation de déviation (460), une douzième électrovanne (412) à trois voies où une voie est fluidiquement connectée à la deuxième canalisation d'introduction (255b), une voie est fluidiquement connectée à la canalisation de déviation (460) et une voie est fluidiquement connectée à la deuxième canalisation de distribution (257b).

8. Aéronef (100) comportant un premier et un deuxième réservoirs (110a-b) de dihydrogène, au moins un moteur (106) et, pour chaque moteur (106), un système d'alimentation (250, 350, 450, 550) selon l'une des revendications précédentes, où chacune des première et deuxième canalisations d'apport (251a-b) est fluidiquement connectée à un des première ou deuxième réservoirs (110a-b), et où les première ou deuxième canalisations de distribution (257a-b) sont fluidiquement connectées au moteur (106).

## Patentansprüche

1. Versorgungssystem (250, 350, 450, 550) für ein Flugzeug (100), umfassend einen ersten und einen zweiten Tank (110a-b) für Diwasserstoff und ein Triebwerk (106), das Versorgungssystem (250, 350, 450, 550) umfassend:
- ein Versorgungsmodul (249, 349, 449, 549), umfassend eine erste Auslassleitung (253a), eine zweite Auslassleitung (253b), eine erste Zuführleitung (251a), die mit einer ersten Hauptpumpe (290a) ausgestattet ist und dazu bestimmt ist, fluidisch an den ersten Tank (110a) angeschlossen zu sein, eine zweite Zuführleitung (251b), die mit einer zweiten Hauptpumpe (290b) ausgestattet ist und dazu bestimmt ist, fluidisch an den zweiten Tank (110b) angeschlossen zu sein, und Mittel, die dazu gestaltet sind, den Diwasserstoff von der ersten und der zweiten Zuführleitung (251a-b) alternierend zu der ersten Auslassleitung (253a) oder der zweiten Auslassleitung (253b) oder beiden zu leiten,
- einen ersten Erhitzer (152),
- einen zweiten Erwärmer (154),
- ein Verteilungsmodul (248, 348), umfassend eine Einführleitung (255a), die fluidisch an die erste Auslassleitung (253a) über den ersten Erwärmer (152) angeschlossen ist, eine zweite Einführleitung (255b), die fluidisch an die zweite Auslassleitung (253b) über den zweiten Erwärmer (154) angeschlossen ist, eine erste Verteilungsleitung (257a) und eine zweite Verteilungsleitung (257b), die dazu bestimmt sind, fluidisch an das Triebwerk (106) angeschlossen zu sein, und Mittel, um den Diwasserstoff von der ersten und der zweiten Einführleitung (255a-b) alternierend zu der ersten Verteilungsleitung (257a) oder der zweiten Verteilungsleitung (257b) oder beiden zu leiten,
- Detektionsmittel, die dazu vorgesehen sind, eine Störung in dem Versorgungsmodul (249, 349, 449, 549), und/oder dem Verteilungsmodul (248, 348) und/oder den ersten und zweiten Erwärmern (152, 154) zu detektieren und Informationen auszugeben, die für die detektierte Störung repräsentativ sind, und
- eine Steuerungseinheit (50), die dazu eingerichtet ist, die Mittel des Versorgungsmoduls (249, 349, 449, 549) und/oder die Mittel des Verteilungsmoduls (248, 348) in Abhängigkeit von den von den Detektionsmitteln ausgegebenen Informationen zu steuern.

2. Versorgungssystem (250) nach Anspruch 1, **dadurch gekennzeichnet, dass** das Versorgungsmodul (249) umfasst:
- eine stromaufwärtige Leitung (280), die fluidisch zwischen der ersten und der zweiten Zuführleitung (251a, 251b) angeschlossen ist,
- eine stromabwärtige Leitung (282), die fluidisch zwischen der ersten Auslassleitung (253a) und der zweiten Auslassleitung (253b) angeschlossen ist,
- eine erste Verbindungsleitung (284) und eine zweite Verbindungsleitung (286), die fluidisch parallel zwischen der stromaufwärtigen Leitung (280) und der stromabwärtigen Leitung (282) angeschlossen sind,
- eine erste Teilleitung (288) und eine zweite Teilleitung (289), die fluidisch parallel zwischen der ersten Verbindungsleitung (284) und der zweiten Verbindungsleitung (286) angeschlossen sind,
- ein erstes Zweiwege-Magnetventil (201), das an der ersten Verbindungsleitung (284) zwischen der stromaufwärtigen Leitung (280) und der ersten Teilleitung (288) montiert ist,
- eine erste sekundäre Pumpe (220), die an der ersten Verbindungsleitung (284) zwischen dem ersten Magnetventil (201) und der ersten Teilleitung (288) montiert ist,
- ein zweites Zweiwege-Magnetventil (202), das an der ersten Verbindungsleitung (284) zwischen der ersten Teilleitung (288) und der zweiten Teilleitung (289) montiert ist,
- ein drittes Zweiwege-Regelungsmagnetventil (203), das an der ersten Verbindungsleitung (284) zwischen der zweiten Teilleitung (289) und der stromabwärtigen Leitung (282) montiert ist,
- ein viertes Zweiwege-Magnetventil (204), das an der ersten Verbindungsleitung (284) zwischen dem dritten Magnetventil (203) und der stromabwärtigen Leitung (282) montiert ist,
- ein fünftes Zweiwege-Magnetventil (205), das an der zweiten Verbindungsleitung (286) zwischen der stromaufwärtigen Leitung (280) und der ersten Teilleitung (288) montiert ist,
- ein sechstes Zweiwege-Regelungsmagnetventil (206), das an der zweiten Verbindungsleitung (286) zwischen dem fünften Magnetventil (205) und der ersten Teilleitung (288) montiert ist,
- ein siebtes Zweiwege-Magnetventil (207), das an der zweiten Verbindungsleitung (286) zwischen der ersten Teilleitung (288) und der zweiten Teilleitung (289) montiert ist,
- eine zweite sekundäre Pumpe (222), die an der zweiten Verbindungsleitung (286) zwischen der zweiten Teilleitung (289) und der stromabwärtigen Leitung (282) montiert ist,
- ein achtes Zweiwege-Magnetventil (208), das an der zweiten Verbindungsleitung (286) zwischen der zweiten sekundären Pumpe (222) und der stromabwärtigen Leitung (282) montiert ist,
- ein neuntes Zweiwege-Magnetventil (209), das an der ersten Teilleitung (288) montiert ist, und
- ein zehntes Zweiwege-Magnetventil (210), das an der zweiten Teilleitung (289) montiert ist.

3. Versorgungssystem (350) nach Anspruch 1, **dadurch gekennzeichnet, dass** das Versorgungsmodul (349) umfasst:
- eine stromaufwärtige Leitung (280), die fluidisch zwischen der ersten und der zweiten Zuführleitung (251a, 251b) angeschlossen ist,
- eine stromabwärtige Leitung (282), die fluidisch zwischen der ersten Auslassleitung (253a) und der zweiten Auslassleitung (253b) angeschlossen ist,
- eine erste Verbindungsleitung (284) und eine zweite Verbindungsleitung (286), die fluidisch parallel zwischen der stromaufwärtigen Leitung (280) und der stromabwärtigen Leitung (282) angeschlossen sind,
- eine erste Teilleitung (288) und eine zweite Teilleitung (289), die fluidisch parallel zwischen der ersten Verbindungsleitung (284) und der zweiten Verbindungsleitung (286) angeschlossen sind,
- ein erstes Zweiwege-Magnetventil (201), das an der ersten Verbindungsleitung (284) zwischen der stromaufwärtigen Leitung (280) und der ersten Teilleitung (288) montiert ist,
- eine erste sekundäre Pumpe (220), die an der ersten Verbindungsleitung (284) zwischen dem ersten Magnetventil (201) und der ersten Teilleitung (288) montiert ist,
- ein zweites Zweiwege-Magnetventil (202), das an der ersten Verbindungsleitung (284) zwischen der ersten Teilleitung (288) und der zweiten Teilleitung (289) montiert ist,
- eine zweite sekundäre Pumpe (322), die an der ersten Verbindungsleitung (284) zwischen der zweiten Teilleitung (289) und dem vierten Magnetventil (204) montiert ist,
- ein viertes Zweiwege-Magnetventil (204), das an der ersten Verbindungsleitung (284) zwischen dem dritten Magnetventil (203) und der stromabwärtigen Leitung (282) montiert ist,
- ein fünftes Zweiwege-Magnetventil (205), das an der zweiten Verbindungsleitung (286) zwischen der stromaufwärtigen Leitung (280) und der ersten Teilleitung (288) montiert ist,
- ein sechstes Zweiwege-Regelungsmagnetventil (206), das an der zweiten Verbindungsleitung (286) zwischen dem fünften Magnetventil (205) und der ersten Teilleitung (288) montiert ist,
- ein siebtes Zweiwege-Magnetventil (207), das an der zweiten Verbindungsleitung (286) zwischen der ersten Teilleitung (288) und der zweiten Teilleitung (289) montiert ist,
- ein drittes Magnetventil (303), das an der zweiten Verbindungsleitung (286) zwischen der zweiten Teilleitung (289) und der stromabwärtigen Leitung (282) montiert ist,
- ein achtes Zweiwege-Magnetventil (208), das an der zweiten Verbindungsleitung (286) zwischen der zweiten sekundären Pumpe (222) und der stromabwärtigen Leitung (282) montiert ist,
- ein neuntes Zweiwege-Magnetventil (209), das an der ersten Teilleitung (288) montiert ist, und
- ein zehntes Zweiwege-Magnetventil (210), das an der zweiten Teilleitung (289) montiert ist.

4. Versorgungssystem (450) nach Anspruch 1, **dadurch gekennzeichnet, dass** das Versorgungsmodul (449) umfasst:
- eine stromaufwärtige Leitung (480), die fluidisch zwischen der ersten und der zweiten Zuführleitung (251a, 251b) angeschlossen ist,
- eine stromabwärtige Leitung (482), die fluidisch zwischen der ersten Auslassleitung (253a) und der zweiten Auslassleitung (253b) angeschlossen ist,
- eine erste Verbindungsleitung (484) und eine zweite Verbindungsleitung (486), die fluidisch parallel zwischen der stromaufwärtigen Leitung (480) und der stromabwärtigen Leitung (482) angeschlossen sind,
- eine erste Teilleitung (488) und eine zweite Teilleitung (489), die fluidisch parallel zwischen der ersten Verbindungsleitung (484) und der zweiten Verbindungsleitung (486) angeschlossen sind,
- an dem Anschluss zwischen der stromaufwärtigen Leitung (480) und der ersten Verbindungsleitung (484) ein erstes Dreiwege-Magnetventil (401),
- an dem Anschluss zwischen der ersten Verbindungsleitung (484) und der ersten Teilleitung (488) ein zweites Dreiwege-Magnetventil (402),
- an dem Anschluss zwischen der ersten Verbindungsleitung (484) und der zweiten Teilleitung (489) ein drittes Dreiwege-Magnetventil (403),
- an dem Anschluss zwischen der stromabwärtigen Leitung (482) und der ersten Verbindungsleitung (484) ein viertes Dreiwege-Magnetventil (404),
- zwischen dem ersten Magnetventil (401) und dem zweiten Magnetventil (402) eine erste sekundäre Pumpe (420),
- zwischen dem dritten Magnetventil (403) und dem vierten Magnetventil (404) ein fünftes Zweiwege-Regelungsmagnetventil (405),
- an dem Anschluss zwischen der stromaufwärtigen Leitung (480) und der zweiten Verbindungsleitung (486) ein sechstes Dreiwege-Magnetventil (406),
- an dem Anschluss zwischen der zweiten Verbindungsleitung (486) und der ersten Teilleitung (488) ein siebtes Dreiwege-Magnetventil (407),
- an dem Anschluss zwischen der zweiten Verbindungsleitung (486) und der zweiten Teilleitung (489) ein achtes Dreiwege-Magnetventil (408),
- an dem Anschluss zwischen der stromabwärtigen Leitung (482) und der zweiten Verbindungsleitung (486) ein neuntes Dreiwege-Magnetventil (409),
- zwischen dem sechsten Magnetventil (406) und dem siebten Magnetventil (407) ein zehntes Zweiwege-Regelungsmagnetventil (410), und
- zwischen dem achten Magnetventil (408) und dem neunten Magnetventil (409) eine zweite sekundäre Pumpe (422).

5. Versorgungssystem (550) nach Anspruch 1, **dadurch gekennzeichnet, dass** das Versorgungsmodul (549) umfasst:
- eine stromaufwärtige Leitung (480), die fluidisch zwischen der ersten und der zweiten Zuführleitung (251a, 251b) angeschlossen ist,
- eine stromabwärtige Leitung (482), die fluidisch zwischen der ersten Auslassleitung (253a) und der zweiten Auslassleitung (253b) angeschlossen ist,
- eine erste Verbindungsleitung (484) und eine zweite Verbindungsleitung (486), die fluidisch parallel zwischen der stromaufwärtigen Leitung (480) und der stromabwärtigen Leitung (482) angeschlossen sind,
- eine erste Teilleitung (488) und eine zweite Teilleitung (489), die fluidisch parallel zwischen der ersten Verbindungsleitung (484) und der zweiten Verbindungsleitung (486) angeschlossen sind,
- an dem Anschluss zwischen der stromaufwärtigen Leitung (480) und der ersten Verbindungsleitung (484) ein erstes Dreiwege-Magnetventil (401),
- an dem Anschluss zwischen der ersten Verbindungsleitung (484) und der ersten Teilleitung (488) ein zweites Dreiwege-Magnetventil (402),
- an dem Anschluss zwischen der ersten Verbindungsleitung (484) und der zweiten Teilleitung (489) ein drittes Dreiwege-Magnetventil (403),
- an dem Anschluss zwischen der stromabwärtigen Leitung (482) und der ersten Verbindungsleitung (484) ein viertes Dreiwege-Magnetventil (404),
- zwischen dem ersten Magnetventil (401) und dem zweiten Magnetventil (402) eine erste sekundäre Pumpe (420),
- zwischen dem dritten Magnetventil (403) und dem vierten Magnetventil (404) eine zweite sekundäre Pumpe (522),
- an dem Anschluss zwischen der stromaufwärtigen Leitung (480) und der zweiten Verbindungsleitung (486) ein sechstes Dreiwege-Magnetventil (406),
- an dem Anschluss zwischen der zweiten Verbindungsleitung (486) und der ersten Teilleitung (488) ein siebtes Dreiwege-Magnetventil (407),
- an dem Anschluss zwischen der zweiten Verbindungsleitung (486) und der zweiten Teilleitung (489) ein achtes Dreiwege-Magnetventil (408),
- an dem Anschluss zwischen der stromabwärtigen Leitung (482) und der zweiten Verbindungsleitung (486) ein neuntes Dreiwege-Magnetventil (409),
- zwischen dem sechsten Magnetventil (406) und dem siebten Magnetventil (407) ein zehntes Zweiwege-Regelungsmagnetventil (410), und
- zwischen dem achten Magnetventil (408) und dem neunten Magnetventil (409) ein fünftes Zweiwege-Regelungsmagnetventil (505).

6. Versorgungssystem (250, 350, 450, 550) nach einem der Ansprüche 1 bis 5, **dadurch gekennzeichnet, dass** die erste Einführleitung (255a) fluidisch an die erste Verteilungsleitung (257a) angeschlossen ist, dass die zweite Einführleitung (255b) fluidisch an die zweite Verteilungsleitung (257b) angeschlossen ist und dass das Verteilungsmodul (248) umfasst:
- eine Bypassleitung (260), die fluidisch zwischen der ersten Einführleitung (255a) und der zweiten Einführleitung (255b) angeschlossen ist,
- ein elftes Zweiwege-Magnetventil (211), das an der Bypassleitung (260) montiert ist,
- zwischen dem ersten Erwärmer (152) und der Bypassleitung (260) ein zwölftes Zweiwege-Magnetventil (212), das an der ersten Einführleitung (255a) montiert ist,
- zwischen der Bypassleitung (260) und dem Triebwerk (106) ein dreizehntes Magnetventil (213), das an der ersten Verteilungsleitung (257a) montiert ist,
- zwischen dem zweiten Erwärmer (154) und der Bypassleitung (260) ein vierzehntes Zweiwege-Magnetventil (214), das an der zweiten Einführleitung (255b) montiert ist, und
- zwischen der Bypassleitung (260) und dem Triebwerk (106) ein fünfzehntes Magnetventil (215), das an der zweiten Verteilungsleitung (257b) montiert ist.

7. Versorgungssystem (250, 350, 450, 550) nach einem der Ansprüche 1 bis 5, **dadurch gekennzeichnet, dass** die erste Einführleitung (255a) fluidisch an die erste Verteilungsleitung (257a) angeschlossen ist, dass die zweite Einführleitung (255b) fluidisch an die zweite Verteilungsleitung (257b) angeschlossen ist und dass das Verteilungsmodul (448) umfasst:
- eine Bypassleitung (460), die fluidisch zwischen der ersten Einführleitung (255a) und der zweiten Einführleitung (255b) angeschlossen ist,
- an dem Anschluss zwischen der ersten Einführleitung (255a) und der Bypassleitung (460) ein elftes Dreiwege-Magnetventil (411), bei dem ein Weg fluidisch an die erste Einführleitung (255a) angeschlossen ist, ein Weg fluidisch an die Bypassleitung (460) angeschlossen ist und ein Weg fluidisch an die erste Verteilungsleitung (257a) angeschlossen ist,
- an dem Anschluss zwischen der zweiten Einführleitung (255b) und der Bypassleitung (460) ein zwölftes Dreiwege-Magnetventil (412), bei dem ein Weg fluidisch an die zweite Einführleitung (255b) angeschlossen ist, ein Weg fluidisch an die Bypassleitung (460) angeschlossen ist und ein Weg fluidisch an die zweite Verteilungsleitung (257b) angeschlossen ist.

8. Flugzeug (100), umfassend einen ersten und einen zweiten Tank (110a-b) für Diwasserstoff, mindestens ein Triebwerk (106) und, für jedes Triebwerk (106), ein Versorgungssystem (250, 350, 450, 550) nach einem der vorhergehenden Ansprüche, wobei jede der ersten und zweiten Zuführleitungen (251a-b) fluidisch an einen der ersten oder zweiten Tanks (110a-b) angeschlossen ist und wobei die ersten oder zweiten Verteilungsleitungen (257ab) fluidisch an das Triebwerk (106) angeschlossen sind.

## Claims

1. Supply system (250, 350, 450, 550) for an aircraft (100), having a first and a second dihydrogen tank (110a-b) and an engine (106), the said supply system (250, 350, 450, 550) having:
- a supply module (249, 349, 449, 549) having a first outlet pipe (253a), a second outlet pipe (253b), a first feed pipe (251a) fitted with a first main pump (290a) and intended to be fluidically connected to the first tank (110a), a second supply pipe (251b) fitted with a second main pump (290b) and intended to be fluidically connected to the second tank (110b), and means designed to channel the dihydrogen in the first and second feed pipes (251a-b) alternatively towards the first outlet pipe (253a) or the second outlet pipe (253b) or both,
- a first heater (152),
- a second heater (154),
- a distribution module (248, 348) having a first introduction pipe (255a) fluidically connected to the first outlet pipe (253a) via the first heater (152), a second introduction pipe (255b) fluidically connected to the second outlet pipe (253b) via the second heater (154), a first distribution pipe (257a) and a second distribution pipe (257b) that are intended to be fluidically connected to the engine (106), and means for channelling the dihydrogen in the first and second introduction pipes (255a-b) alternatively towards the first distribution pipe (257a) or the second distribution pipe (257b) or both,
- detection means intended to detect an incident in the supply module (249, 349, 449, 549) and/or the distribution module (248, 348) and/or the first and second heaters (152, 154), and to provide information representative of the said incident that was detected, and
- a control unit (50) designed to command the means of the supply module (249, 349, 449, 549) and/or the means of the distribution module (248, 348) depending on the information provided by the detection means.

2. Supply system (250) according to Claim 1, **characterized in that** the supply module (249) has:
- an upstream pipe (280) fluidically connected between the first and second feed pipes (251a, 251b),
- a downstream pipe (282) fluidically connected between the first outlet pipe (253a) and the second outlet pipe (253b),
- a first linking pipe (284) and a second linking pipe (286) that are fluidically connected in parallel between the upstream pipe (280) and the downstream pipe (282),
- a first sub-pipe (288) and a second sub-pipe (289) that are fluidically connected in parallel between the first linking pipe (284) and the second linking pipe (286),
- a two-way first solenoid valve (201) mounted on the first linking pipe (284) between the upstream pipe (280) and the first sub-pipe (288),
- a first secondary pump (220) mounted on the first linking pipe (284) between the first solenoid valve (201) and the first sub-pipe (288),
- a two-way second solenoid valve (202) mounted on the first linking pipe (284) between the first sub-pipe (288) and the second sub-pipe (289),
- a regulating two-way third solenoid valve (203) mounted on the first linking pipe (284) between the second sub-pipe (289) and the downstream pipe (282),
- a two-way fourth solenoid valve (204) mounted on the first linking pipe (284) between the third solenoid valve (203) and the downstream pipe (282),
- a two-way fifth solenoid valve (205) mounted on the second linking pipe (286) between the upstream pipe (280) and the first sub-pipe (288),
- a regulating two-way sixth solenoid valve (206) mounted on the second linking pipe (286) between the fifth solenoid valve (205) and the first sub-pipe (288),
- a two-way seventh solenoid valve (207) mounted on the second linking pipe (286) between the first sub-pipe (288) and the second sub-pipe (289),
- a second secondary pump (222) mounted on the second linking pipe (286) between the second sub-pipe (289) and the downstream pipe (282),
- a two-way eighth solenoid valve (208) mounted on the second linking pipe (286) between the second secondary pump (222) and the downstream pipe (282),
- a two-way ninth solenoid valve (209) mounted on the first sub-pipe (288), and
- a two-way tenth solenoid valve (210) mounted on the second sub-pipe (289).

3. Supply system (350) according to Claim 1, **characterized in that** the supply module (349) has:
- an upstream pipe (280) fluidically connected between the first and second feed pipes (251a, 251b),
- a downstream pipe (282) fluidically connected between the first outlet pipe (253a) and the second outlet pipe (253b),
- a first linking pipe (284) and a second linking pipe (286) that are fluidically connected in parallel between the upstream pipe (280) and the downstream pipe (282),
- a first sub-pipe (288) and a second sub-pipe (289) that are fluidically connected in parallel between the first linking pipe (284) and the second linking pipe (286),
- a two-way first solenoid valve (201) mounted on the first linking pipe (284) between the upstream pipe (280) and the first sub-pipe (288),
- a first secondary pump (220) mounted on the first linking pipe (284) between the first solenoid valve (201) and the first sub-pipe (288),
- a two-way second solenoid valve (202) mounted on the first linking pipe (284) between the first sub-pipe (288) and the second sub-pipe (289),
- a second secondary pump (322) mounted on the first linking pipe (284) between the second sub-pipe (289) and the fourth solenoid valve (204),
- a two-way fourth solenoid valve (204) mounted on the first linking pipe (284) between the third solenoid valve (203) and the downstream pipe (282),
- a two-way fifth solenoid valve (205) mounted on the second linking pipe (286) between the upstream pipe (280) and the first sub-pipe (288),
- a regulating two-way sixth solenoid valve (206) mounted on the second linking pipe (286) between the fifth solenoid valve (205) and the first sub-pipe (288),
- a two-way seventh solenoid valve (207) mounted on the second linking pipe (286) between the first sub-pipe (288) and the second sub-pipe (289),
- a third solenoid valve (303) mounted on the second linking pipe (286) between the second sub-pipe (289) and the downstream pipe (282),
- a two-way eighth solenoid valve (208) mounted on the second linking pipe (286) between the second secondary pump (222) and the downstream pipe (282),
- a two-way ninth solenoid valve (209) mounted on the first sub-pipe (288), and
- a two-way tenth solenoid valve (210) mounted on the second sub-pipe (289).

4. Supply system (450) according to Claim 1, **characterized in that** the supply module (449) has:
- an upstream pipe (480) fluidically connected between the first and second feed pipes (251a, 251b),
- a downstream pipe (482) fluidically connected between the first outlet pipe (253a) and the second outlet pipe (253b),
- a first linking pipe (484) and a second linking pipe (486) that are fluidically connected in parallel between the upstream pipe (480) and the downstream pipe (482),
- a first sub-pipe (488) and a second sub-pipe (489) that are fluidically connected in parallel between the first linking pipe (484) and the second linking pipe (486),
- at the connection between the upstream pipe (480) and the first linking pipe (484), a three-way first solenoid valve (401),
- at the connection between the first linking pipe (484) and the first sub-pipe (488), a three-way second solenoid valve (402),
- at the connection between the first linking pipe (484) and the second sub-pipe (489), a three-way third solenoid valve (403),
- at the connection between the downstream pipe (482) and the first linking pipe (484), a three-way fourth solenoid valve (404),
- between the first solenoid valve (401) and the second solenoid valve (402), a first secondary pump (420),
- between the third solenoid valve (403) and the fourth solenoid valve (404), a regulating two-way fifth solenoid valve (405),
- at the connection between the upstream pipe (480) and the second linking pipe (486), a three-way sixth solenoid valve (406),
- at the connection between the second linking pipe (486) and the first sub-pipe (488), a three-way seventh solenoid valve (407),
- at the connection between the second linking pipe (486) and the second sub-pipe (489), a three-way eighth solenoid valve (408),
- at the connection between the downstream pipe (482) and the second linking pipe (486), a three-way ninth solenoid valve (409),
- between the sixth solenoid valve (406) and the seventh solenoid valve (407), a regulating two-way tenth solenoid valve (410), and
- between the eighth solenoid valve (408) and the ninth solenoid valve (409), a second secondary pump (422).

5. Supply system (550) according to Claim 1, **characterized in that** the supply module (549) has:
- an upstream pipe (480) fluidically connected between the first and second feed pipes (251a, 251b),
- a downstream pipe (482) fluidically connected between the first outlet pipe (253a) and the second outlet pipe (253b),
- a first linking pipe (484) and a second linking pipe (486) that are fluidically connected in parallel between the upstream pipe (480) and the downstream pipe (482),
- a first sub-pipe (488) and a second sub-pipe (489) that are fluidically connected in parallel between the first linking pipe (484) and the second linking pipe (486),
- at the connection between the upstream pipe (480) and the first linking pipe (484), a three-way first solenoid valve (401),
- at the connection between the first linking pipe (484) and the first sub-pipe (488), a three-way second solenoid valve (402),
- at the connection between the first linking pipe (484) and the second sub-pipe (489), a three-way third solenoid valve (403),
- at the connection between the downstream pipe (482) and the first linking pipe (484), a three-way fourth solenoid valve (404),
- between the first solenoid valve (401) and the second solenoid valve (402), a first secondary pump (420),
- between the third solenoid valve (403) and the fourth solenoid valve (404), a second secondary pump (522),
- at the connection between the upstream pipe (480) and the second linking pipe (486), a three-way sixth solenoid valve (406),
- at the connection between the second linking pipe (486) and the first sub-pipe (488), a three-way seventh solenoid valve (407),
- at the connection between the second linking pipe (486) and the second sub-pipe (489), a three-way eighth solenoid valve (408),
- at the connection between the downstream pipe (482) and the second linking pipe (486), a three-way ninth solenoid valve (409),
- between the sixth solenoid valve (406) and the seventh solenoid valve (407), a regulating two-way tenth solenoid valve (410), and
- between the eighth solenoid valve (408) and the ninth solenoid valve (409), a regulating two-way fifth solenoid valve (505).

6. Supply system (250, 350, 450, 550) according to one of Claims 1 to 5, **characterized in that** the first introduction pipe (255a) is fluidically connected to the first distribution pipe (257a), **in that** the second introduction pipe (255b) is fluidically connected to the second distribution pipe (257b), and **in that** the distribution module (248) has:
- a bypass pipe (260) fluidically connected between the first introduction pipe (255a) and the second introduction pipe (255b),
- a two-way eleventh solenoid valve (211) mounted on the bypass pipe (260),
- between the first heater (152) and the bypass pipe (260), a two-way twelfth solenoid valve (212) mounted on the first introduction pipe (255a),
- between the bypass pipe (260) and the engine (106), a thirteenth solenoid valve (213) mounted on the first distribution pipe (257a),
- between the second heater (154) and the bypass pipe (260), a two-way fourteenth solenoid valve (214) mounted on the second introduction pipe (255b), and
- between the bypass pipe (260) and the engine (106), a fifteenth solenoid valve (215) mounted on the second distribution pipe (257b).

7. Supply system (250, 350, 450, 550) according to one of Claims 1 to 5, **characterized in that** the first introduction pipe (255a) is fluidically connected to the first distribution pipe (257a), **in that** the second introduction pipe (255b) is fluidically connected to the second distribution pipe (257b), and **in that** the distribution module (448) has:
- a bypass pipe (460) fluidically connected between the first introduction pipe (255a) and the second introduction pipe (255b),
- at the connection between the first introduction pipe (255a) and the bypass pipe (460), a three-way eleventh solenoid valve (411), wherein one port is fluidically connected to the first introduction pipe (255a), one port is fluidically connected to the bypass pipe (460), and one port is fluidically connected to the first distribution pipe (257a),
- at the connection between the second introduction pipe (255b) and the bypass pipe (460), a three-way twelfth solenoid valve (412), wherein one port is fluidically connected to the second introduction pipe (255b), one port is fluidically connected to the bypass pipe (460), and one port is fluidically connected to the second distribution pipe (257b).

8. Aircraft (100) having a first and a second dihydrogen tank (110a-b), at least one engine (106) and, for each engine (106), a supply system (250, 350, 450, 550) according to one of the preceding claims, wherein each of the first and second feed pipes (251a-b) is fluidically connected to one of the first and the second tank (110a-b), and wherein the first and second distribution pipes (257a-b) are fluidically connected to the engine (106).
